# EUROPEAN PATENT APPLICATION

(11) **EP 4 665 016 A1**
(43) Date of publication of application: **17.12.2025**
(21) Application number: 24759618.2
(22) Date of filing: 18.02.2024
(51) Int. Cl.: H04W 56/00

(54) **CLOCK SYNCHRONIZATION METHOD AND APPARATUS**

(30) Priority: 20.02.2023 CN 202310183853; 26.04.2023 CN 202310476184
(71) Applicant: Huawei Technologies Co., Ltd., Shenzhen, Guangdong 518129 (CN)
(72) Inventor: HE, Hongli, Shenzhen, Guangdong 518129 (CN); LI, Xueru, Shenzhen, Guangdong 518129 (CN)
(74) Representative: Pfenning, Meinig & Partner mbB
(86) International application number: PCT/CN2024/077408
(87) International publication number: WO 2024/174941

(57) **Abstract**

This application relates to a clock synchronization method and apparatus. A first terminal device receives at least one piece of clock synchronization information, where the at least one piece of clock synchronization information includes first clock synchronization information, and the first clock synchronization information is received from a second terminal device through a sidelink. The first terminal device selects a clock synchronization reference source based on the at least one piece of clock synchronization information. In embodiments of this application, a terminal device can also send clock synchronization information. For example, although a terminal device outside a coverage area of a base station cannot receive clock synchronization information from the base station, the terminal device may still receive clock synchronization information from another terminal device through a sidelink, so that a probability of implementing clock synchronization between the terminal device and a network is increased.

## Description

### CROSS-REFERENCE TO RELATED APPLICATIONS

This application claims priority to Chinese Patent Application No. 202310183853.2, filed with the China National Intellectual Property Administration on February 20, 2023 and entitled "CLOCK SYNCHRONIZATION METHOD AND DEVICE", which is incorporated herein by reference in its entirety; and this application claims priority to Chinese Patent Application No. 202310476184.8, filed with the China National Intellectual Property Administration on April 26, 2023 and entitled "CLOCK SYNCHRONIZATION METHOD AND APPARATUS", which is incorporated herein by reference in its entirety.

### TECHNICAL FIELD

This application relates to the field of communication technologies, and in particular, to a clock synchronization method and apparatus.

### BACKGROUND

Currently, a clock synchronization process in a 5th generation (5th generation, 5G) mobile communication technology network is mainly for supporting clock synchronization in Uu interface communication. The clock synchronization process mainly includes core network clock synchronization and air interface clock synchronization in a radio access network.

In a core network clock synchronization process, a master clock may be set in the 5G network, to serve as a clock synchronization reference source in the 5G network. The master clock may be connected to each core network device (for example, a user plane function (user plane function, UPF) device) in the 5G network through a wired network, and may be connected to an access network device, for example, a base station. Therefore, clock synchronization between the master clock and another device may be implemented in a wired manner in the 5G network.

In the core network clock synchronization process, synchronization between the base station and the 5G master clock has been completed. Therefore, in an air interface clock synchronization process in the radio access network, only clock synchronization between the access network device and a user equipment (user equipment, UE) needs to be completed. In this way, synchronization between the UE and the master clock in the 5G network is implemented.

However, currently, clock synchronization between the UE and the 5G network is implemented only with coverage of the access network device. In some cases, if the UE is outside a coverage area of the access network device, the UE cannot implement clock synchronization with the 5G network.

### SUMMARY

Embodiments of this application provide a clock synchronization method and apparatus, so that synchronization can be implemented between a network and a terminal device outside a coverage area of a base station.

According to a first aspect, a first clock synchronization method is provided. The method may be performed by a terminal device, or may be performed by another device including a function of the terminal device, or may be performed by a chip system (or a chip) or another functional module. The chip system or the functional module can implement the function of the terminal device, and the chip system or the functional module is, for example, disposed in the terminal device. The terminal device is, for example, a first terminal device. The method includes: receiving at least one piece of clock synchronization information, where the at least one piece of clock synchronization information includes first clock synchronization information, and the first clock synchronization information is received from a second terminal device through a sidelink; and selecting a clock synchronization reference source based on the at least one piece of clock synchronization information.

In this embodiment of this application, the terminal device can also send clock synchronization information. For example, although a terminal device outside a coverage area of a network cannot receive clock synchronization information from the network, the terminal device may still receive clock synchronization information from another terminal device through a sidelink (sidelink, SL). However, the terminal device that sends the clock synchronization information may be a terminal device that has implemented clock synchronization with the network. Therefore, the terminal device outside the coverage area of the network can also implement synchronization with the network based on the clock synchronization information from the another terminal device, so that a probability of implementing clock synchronization between the terminal device and the network is increased. For another example, one of a plurality of terminal devices outside a coverage area of a network may send clock synchronization information to another terminal device, so that clock synchronization is implemented between the plurality of terminal devices.

In an optional implementation, the first clock synchronization information includes information about a first moment and information about a first time unit, where the first moment is a moment of a boundary of the first time unit. For example, the terminal device (for example, the first terminal device) that receives the first clock synchronization information may determine, based on the information about the first moment and the information about the first time unit that are included in the first clock synchronization information, that the moment of the boundary of the first time unit is the first moment. In this way, the first terminal device implements clock synchronization with the second terminal device.

In an optional implementation, the first clock synchronization information further includes one or more of the following: type information of an initial clock synchronization reference source of the second terminal device; hop count information between the second terminal device and an initial clock synchronization reference source of the second terminal device; or information about whether an initial clock synchronization reference source of the second terminal device completes time-frequency synchronization with an access network device, where a type of the initial clock synchronization reference source includes access network device, satellite device, or terminal device. According to the foregoing solution, there may be more reference factors for the terminal device that receives the clock synchronization information to select the clock synchronization reference source, so that accuracy of the selected clock synchronization reference source is higher. Optionally, completing time-frequency synchronization with the access network device may also be understood as completing SSB synchronization with the access network device, or detecting a cell, or camping on a cell.

In an optional implementation, the at least one piece of clock synchronization information further includes second clock synchronization information and/or third clock synchronization information, the second clock synchronization information is from a first access network device, and the third clock synchronization information is from a first satellite device. Selecting the clock synchronization reference source based on the at least one piece of clock synchronization information includes: selecting a first device as the clock synchronization reference source based on a clock synchronization priority of the second terminal device, and a clock synchronization priority of the first access network device and/or a clock synchronization priority of the first satellite device, where the first device is a device with a highest clock synchronization priority in the second terminal device, and the first access network device and/or the first satellite device. If the first terminal device receives clock synchronization information from different clock synchronization reference sources, the first terminal device may select a clock synchronization reference source with a highest clock synchronization priority. Based on this selection mechanism, more devices can synchronize with a clock synchronization reference source with a higher priority as much as possible, to implement global clock synchronization between the devices.

In an optional implementation, a sequence of the clock synchronization priorities in descending order includes: a clock synchronization priority of a satellite device is higher than a clock synchronization priority of a terminal device that uses a satellite device as an initial clock synchronization reference source, a clock synchronization priority of a terminal device that uses a satellite device as an initial clock synchronization reference source is higher than a clock synchronization priority of an access network device, a clock synchronization priority of an access network device is higher than a clock synchronization priority of a terminal device that uses an access network device as an initial clock synchronization reference source, and a clock synchronization priority of a terminal device that uses an access network device as an initial clock synchronization reference source is higher than a clock synchronization priority of a terminal device that uses a terminal device as an initial clock synchronization reference source; or a clock synchronization priority of an access network device is higher than a clock synchronization priority of a terminal device that uses an access network device as an initial clock synchronization reference source, a clock synchronization priority of a terminal device that uses an access network device as an initial clock synchronization reference source is higher than a clock synchronization priority of a satellite device, a clock synchronization priority of a satellite device is higher than a clock synchronization priority of a terminal device that uses a satellite device as an initial clock synchronization reference source, and a clock synchronization priority of a terminal device that uses a satellite device as an initial clock synchronization reference source is higher than a clock synchronization priority of a terminal device that uses a terminal device as an initial clock synchronization reference source. The clock synchronization priorities may be arranged in different sequences. The foregoing two examples are provided. The first terminal device may select the clock synchronization reference source in the foregoing arrangement sequence.

In an optional implementation, the at least one piece of clock synchronization information further includes fourth clock synchronization information, and the fourth clock synchronization information is from a third terminal device. The clock synchronization priority of the second terminal device is higher than a clock synchronization priority of the third terminal device. The first clock synchronization information indicates that the type of the initial clock synchronization reference source of the second terminal device is a terminal device, and indicates that the initial clock synchronization reference source of the second terminal device completes time-frequency synchronization with the access network device. The fourth clock synchronization information indicates that a type of an initial clock synchronization reference source of the third terminal device is a terminal device, and indicates that the initial clock synchronization reference source of the third terminal device does not complete time-frequency synchronization with the access network device. Each classification in the foregoing clock synchronization priority sequence may be considered as a priority group. If two transmit ends of the clock synchronization information belong to a same priority group, a clock synchronization reference source may be selected based on another factor. For example, the clock synchronization reference source may be selected depending on whether an initial clock synchronization reference source of the transmit end of the clock synchronization information completes time-frequency synchronization with the access network device. If a device has completed time-frequency synchronization with the access network device, although the device does not receive the clock synchronization information from the access network device, the device implements time-frequency synchronization with the access network device. This helps improve clock precision of the device. Therefore, the first terminal device may use a device that has completed time-frequency synchronization as the initial clock synchronization reference source.

In an optional implementation, the at least one piece of clock synchronization information further includes fourth clock synchronization information, and the fourth clock synchronization information is from a third terminal device. The clock synchronization priority of the second terminal device is higher than a clock synchronization priority of the third terminal device. The first clock synchronization information indicates that a hop count between the second terminal device and the initial clock synchronization reference source of the second terminal device is a first quantity. The fourth clock synchronization information indicates that a hop count between the third terminal device and an initial clock synchronization reference source of the third terminal device is a second quantity. The first quantity is less than the second quantity. The type that is of the initial clock synchronization reference source of the second terminal device and that is indicated by the first clock synchronization information is the same as a type that is of the initial clock synchronization reference source of the third terminal device and that is indicated by the fourth clock synchronization information. For example, the first clock synchronization information indicates that the type of the initial clock synchronization reference source of the second terminal device is a satellite device, and the fourth clock synchronization information indicates that the type of the initial clock synchronization reference source of the third terminal device is a satellite device. Alternatively, the first clock synchronization information indicates that the type of the initial clock synchronization reference source of the second terminal device is an access network device, and the fourth clock synchronization information indicates that the type of the initial clock synchronization reference source of the third terminal device is an access network device. Alternatively, the first clock synchronization information indicates that the type of the initial clock synchronization reference source of the second terminal device is a terminal device, and the fourth clock synchronization information indicates that the type of the initial clock synchronization reference source of the third terminal device is a terminal device. Each classification in the foregoing clock synchronization priority sequence may be considered as a priority group. If two transmit ends of the clock synchronization information belong to a same priority group, a clock synchronization reference source may be selected based on another factor. For example, a clock synchronization reference source may be selected based on a hop count indicated by the clock synchronization information. A smaller hop count indicated by one piece of clock synchronization information indicates a shorter transmission path through which clock synchronization passes and higher precision. Therefore, the first terminal device may select a transmit end of the clock synchronization information as the clock synchronization reference source.

In an optional implementation, selecting the clock synchronization reference source based on the at least one piece of clock synchronization information includes: selecting the second terminal device as the clock synchronization reference source based on the at least one piece of clock synchronization information. The method further includes: determining a propagation delay and/or round trip time with the second terminal device; and performing clock synchronization with the second terminal device based on the propagation delay and/or the round trip time and the first clock synchronization information. If the first terminal device selects the second terminal device as the clock synchronization reference source, the first terminal device may further compensate the clock synchronization information based on the propagation delay or the round trip time between the first terminal device and the second terminal device, so that clock synchronization between the first terminal device and the second terminal device is more accurate.

In an optional implementation, the first clock synchronization information is multicast information or broadcast information, the first clock synchronization information further includes a first unicast identifier of the second terminal device, and the first unicast identifier is for unicast communication between the second terminal device and the first terminal device.

In an optional implementation, the method further includes: configuring a reference signal with the second terminal device based on the first unicast identifier, and/or configuring reporting of a measurement result with the second terminal device based on the first unicast identifier, where the measurement result is for determining the propagation delay and/or the round trip time between the first terminal device and the second terminal device. The first clock synchronization information may further include one or more unicast identifiers of the second terminal device, so that a receive end (for example, the first terminal device) of the first clock synchronization information can match the first clock synchronization information with other information of the second terminal device. For example, the other information is for determining the propagation delay and/or the round trip time between the first terminal device and the second terminal device.

In an optional implementation, the method further includes: receiving fifth clock synchronization information from a second device, where the second device is an access network device, a satellite device, or another terminal device; and if a clock synchronization priority of the second device is higher than a clock synchronization priority of the first device, selecting the second device as a clock synchronization reference source, where the first device is the clock synchronization reference source that has been (previously) selected. After completing clock synchronization with the first device, the first terminal device may further continue to receive clock synchronization information from another device. If the first terminal device receives clock synchronization information sent by a device with a clock priority higher than that of the first device, the first terminal device may complete clock synchronization with the device, so that the first terminal device can complete clock synchronization with a clock synchronization reference source with a higher priority as much as possible, to improve clock synchronization precision.

In an optional implementation, the at least one piece of clock synchronization information further includes the second clock synchronization information from the first access network device, and the second clock synchronization information includes information about a second moment. The second moment is a moment of a boundary of a first system frame, and the second clock synchronization information further includes a frame number of the first system frame. Alternatively, the second moment is a moment of a boundary of a first system information-window, and the first system information-window is for determining transmission time of first system information. For example, the first terminal device may determine a time domain position of a boundary of a first system frame number based on information that is about a moment of the boundary of the first system frame number and that is included in the second clock synchronization information, and may determine that the time domain position of the boundary of the first system frame number is the second moment. In this way, the first terminal device implements clock synchronization with the access network device.

In an optional implementation, the at least one piece of clock synchronization information further includes the third clock synchronization information from the first satellite device. Optionally, the first satellite device corresponds to a global navigation satellite system. For example, the first satellite device includes one or more of the following satellite devices: a GPS, a BeiDou satellite, or a Galileo satellite. In addition, the first satellite device may further include another type of satellite device.

According to a second aspect, a second clock synchronization method is provided. The method may be performed by a terminal device, or may be performed by another device including a function of the terminal device, or may be performed by a chip system (or a chip) or another functional module. The chip system or the functional module can implement the function of the terminal device, and the chip system or the functional module is, for example, disposed in the terminal device. The terminal device is, for example, a first terminal device. The method includes: sending sixth clock synchronization information. The sixth clock synchronization information is used by another terminal device to perform clock synchronization. The sixth clock synchronization information includes information about a third moment and information about a second time unit, where the third moment is a moment of a boundary of the second time unit.

In this embodiment of this application, the terminal device can also send clock synchronization information. For example, although a terminal device outside a coverage area of an access network device cannot receive clock synchronization information from the access network device, the terminal device may still receive clock synchronization information from another terminal device through an SL. However, the terminal device that sends the clock synchronization information may be a terminal device that has implemented clock synchronization with a network. Therefore, the terminal device outside the coverage area of the access network device can also implement synchronization with the network based on clock synchronization information from another UE, so that a probability of implementing clock synchronization between the terminal device and the network is increased. For another example, one of a plurality of terminal devices outside a coverage area of a network may send clock synchronization information to another terminal device, so that clock synchronization is implemented between the plurality of terminal devices.

In an optional implementation, the sixth clock synchronization information further includes one or more of the following: type information of an initial clock synchronization reference source of the first terminal device; hop count information between the first terminal device and an initial clock synchronization reference source of the first terminal device; or information about whether an initial clock synchronization reference source of the first terminal device completes time-frequency synchronization with an access network device, where a type of the initial clock synchronization reference source includes access network device, satellite device, or terminal device.

In an optional implementation, before the sixth clock synchronization information is sent, first clock synchronization information is received from a second terminal device through a sidelink, and the first terminal device selects the second terminal device as a clock synchronization reference source. The first clock synchronization information includes type information of an initial clock synchronization reference source of the second terminal device, and the type that is of the initial clock synchronization reference source and that is indicated by the type information of the initial clock synchronization reference source included in the sixth clock synchronization information is the same as a type that is of the initial clock synchronization reference source and that is indicated by the type information of the initial clock synchronization reference source included in the first clock synchronization information; and/or the first clock synchronization information includes hop count information between the second terminal device and an initial clock synchronization reference source of the second terminal device, and a hop count indicated by the hop count information included in the sixth clock synchronization information is a hop count indicated by the first clock synchronization information plus 1. It is equivalent to that a hop is increased by 1 after the clock synchronization information sent by the initial clock synchronization reference source of the second terminal device passes the first terminal device. Therefore, the hop count indicated by the hop count information included in the sixth clock synchronization information may be the hop count indicated by the first clock synchronization information plus 1.

In an optional implementation, the method further includes: selecting a local clock of the first terminal device as a clock synchronization reference source (or selecting the first terminal device as a clock synchronization reference source), where the type that is of the initial clock synchronization reference source of the first terminal device and that is indicated by the sixth clock synchronization information is a terminal device, and/or a hop count indicated by the hop count information included in the sixth clock synchronization information is 0.

In an optional implementation, the method further includes: selecting a first access network device as a clock synchronization reference source, where a type that is of the initial clock synchronization reference source and that is indicated by the type information of the initial clock synchronization reference source included in the sixth clock synchronization information is an access network device, and/or a hop count indicated by the hop count information included in the sixth clock synchronization information is 0 or 1.

In an optional implementation, the method further includes: selecting a first satellite device as a clock synchronization reference source, where a type that is of the initial clock synchronization reference source and that is indicated by the type information of the initial clock synchronization reference source included in the sixth clock synchronization information is a satellite device, and/or a hop count indicated by the hop count information included in the sixth clock synchronization information is 0 or 1.

In an optional implementation, the sixth clock synchronization information further includes at least one unicast identifier of the first terminal device, and any one of the at least one unicast identifier is for unicast communication between the first terminal device and another terminal device.

In an optional implementation, sending the sixth clock synchronization information includes: sending the sixth clock synchronization information when a first condition is met, where the first condition includes at least one of the following: the first terminal device is authorized to send clock synchronization information; the first terminal device receives target clock synchronization information from a first device, and determines that the first device is the clock synchronization reference source, where received power corresponding to the target clock synchronization information is less than or equal to a first threshold, and the first device is an access network device, a satellite device, or another terminal device; the first terminal device receives target clock synchronization information from a first device, and determines that the first device is the clock synchronization reference source, where received power corresponding to the target clock synchronization information is greater than or equal to a second threshold, and the first device is an access network device, a satellite device, or another terminal device; or the first terminal device does not select a device other than the first terminal device as the clock synchronization reference source. For example, the first terminal device has received the first clock synchronization information from the first device, and performs clock synchronization with the first device based on the first clock synchronization information. In this case, if received power corresponding to the first clock synchronization information is less than or equal to the first threshold, the first terminal device may send the sixth clock synchronization information. For example, the received power corresponding to the first clock synchronization information being less than or equal to the first threshold indicates that signal quality of the first device is poor, and a large quantity of devices may fail to be covered. Therefore, the first terminal device may send the clock synchronization information, to expand coverage of the clock synchronization information, so that more devices can complete clock synchronization.

For technical effects brought by some optional implementations in the second aspect, refer to the descriptions of technical effects of corresponding implementations in the first aspect. Details are not described.

According to a third aspect, a communication apparatus is provided. The communication apparatus may be the first terminal device in the first aspect or the second aspect. The communication apparatus has a function of the foregoing first terminal device. The communication apparatus is, for example, the first terminal device, a large device including the first terminal device, or a functional module, for example, a baseband apparatus or a chip system, in the first terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When implementing the sending function, the transceiver unit may be referred to as a sending unit (sometimes also referred to as a sending module). When implementing the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the receiving unit) is configured to receive at least one piece of clock synchronization information, where the at least one piece of clock synchronization information includes first clock synchronization information, and the first clock synchronization information is received from a second terminal device through a sidelink. The processing unit is configured to select a clock synchronization reference source based on the at least one piece of clock synchronization information.

In an optional implementation, the transceiver unit (or the sending unit) is configured to send sixth clock synchronization information. The sixth clock synchronization information is used by another terminal device to perform clock synchronization. The sixth clock synchronization information includes information about a third moment and information about a second time unit, where the third moment is a moment of a boundary of the second time unit.

In an optional implementation, the communication apparatus further includes a storage unit (sometimes also referred to as a storage module). The processing unit is configured to be coupled to the storage unit, and execute a program or instructions in the storage unit, to enable the communication apparatus to perform a function of the first terminal device in the first aspect or the second aspect.

According to a fourth aspect, a communication apparatus is provided. The communication apparatus may be a first terminal device, or may be a chip or a chip system used in the first terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first terminal device in the foregoing aspects.

According to a fifth aspect, a communication system is provided and includes a first terminal device. The first terminal device is configured to perform the method performed by the first terminal device according to the first aspect or the second aspect. For example, the first terminal device may be implemented by using the communication apparatus according to the third aspect or the fourth aspect.

According to a sixth aspect, a computer-readable storage medium is provided. The computer-readable storage medium is configured to store a computer program or instructions. When the computer program or the instructions are run, the method performed by the first terminal device in the foregoing aspects is implemented.

According to a seventh aspect, a computer program product including instructions is provided. When the computer program product runs on a computer, the method in the foregoing aspects is implemented.

According to an eighth aspect, a chip system is provided and includes a processor and an interface. The processor is configured to invoke instructions from the interface and run the instructions, to enable the chip system to implement the method in the foregoing aspects.

### BRIEF DESCRIPTION OF DRAWINGS

FIG. 1 is a diagram of a network architecture in which a 5G network adapts to TSN synchronization;
FIG. 2 is a diagram of a communication network architecture to which an embodiment of this application is applied;
FIG. 3 is a flowchart of a clock synchronization method according to an embodiment of this application;
FIG. 4 is a diagram of an initial synchronization reference source according to an embodiment of this application;
FIG. 5 is a diagram of PDC according to an embodiment of this application;
FIG. 6 is a flowchart of another clock synchronization method according to an embodiment of this application;
FIG. 7 is a diagram of implementing clock synchronization by a UE according to an embodiment of this application;
FIG. 8 is a diagram of an apparatus according to an embodiment of this application;
   and
FIG. 9 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one of the following items (pieces)", "one or more of items", or a similar expression thereof means any combination of these items, including a single item or any combination of a plurality of items. For example, at least one of a, b, or c or one or more of a, b, or c indicates a, b, c, a and b, a and c, b and c, or a, b and c. Each of a, b, and c may be a single item, or may be a plurality of items.

Ordinal numbers such as "first" and "second" in embodiments of this application are intended to distinguish between a plurality of objects, and are not intended to limit sizes, content, a sequence, a time sequence, priorities, importance, or the like of the plurality of objects. For example, first clock synchronization information and second clock synchronization information may be same information, or may be different information. In addition, the name does not indicate that the two pieces of information include different content, transmit ends/receive ends, sending sequences, sizes, application scenarios, priorities, importance degrees, or the like. In addition, step numbers in embodiments described in this application are merely intended to distinguish between different steps, but are not intended to limit a sequence of the steps. For example, S301 may be performed before S302, may be performed after S302, or may be performed simultaneously with S302.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to terminal devices in the following scenarios: cellular communication, device-to-device (device-to-device, D2D), vehicle-to-everything (vehicle-to-everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, smart wearables, smart transportation, a smart city (smart city), an uncrewed aerial vehicle, and a robot. The terminal device may sometimes be referred to as a UE, a terminal, an access station, a UE station, a remote station, a wireless communication device, a user apparatus, or the like. For ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a V2X technology may be a road side unit (road side unit, RSU). The following provides descriptions by using an example in which the access network device is a base station. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments of this application. 5G is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used to describe the technical solutions provided in embodiments of this application.

Currently, in 5G, clock synchronization between a UE and a 5G network is implemented only with coverage of an access network device. In some cases, if the UE is outside a coverage area of the access network device, the UE cannot implement clock synchronization with the 5G network. However, in some scenarios, clock synchronization needs to be implemented in the 5G network (that is, both a core network and a radio access network need to implement clock synchronization). Otherwise, the 5G network may fail to perform a corresponding function.

For example, the 5G network may support a delay sensitive network (time sensitive network, TSN) or a network supporting delay sensitive communication (time sensitive communication, TSC). In this scenario, clock synchronization needs to be implemented in the 5G network. Brief descriptions are provided below.

In the TSN or the TSC network, low latency and high reliability transmission can be implemented, and this is an important development direction in future industrial communication. In a common TSN network or a network supporting TSC, devices are generally connected by using a wired network technology (for example, an ethernet technology). This connection manner limits a network deployment scenario. For example, an automated guided vehicle (automated guided vehicle, AGV) that has a mobile communication requirement in an industrial scenario cannot be used as a device in the TSN or the TSC network. Therefore, currently, in 3GPP, a 5G network supports a TSN or a network supporting TSC. For example, the 5G network is used as a part of the TSN or the network supporting TSC, so that wireless connections between some devices are implemented, and mobile communication requirements of some devices in the TSN or the network supporting TSC are further met.

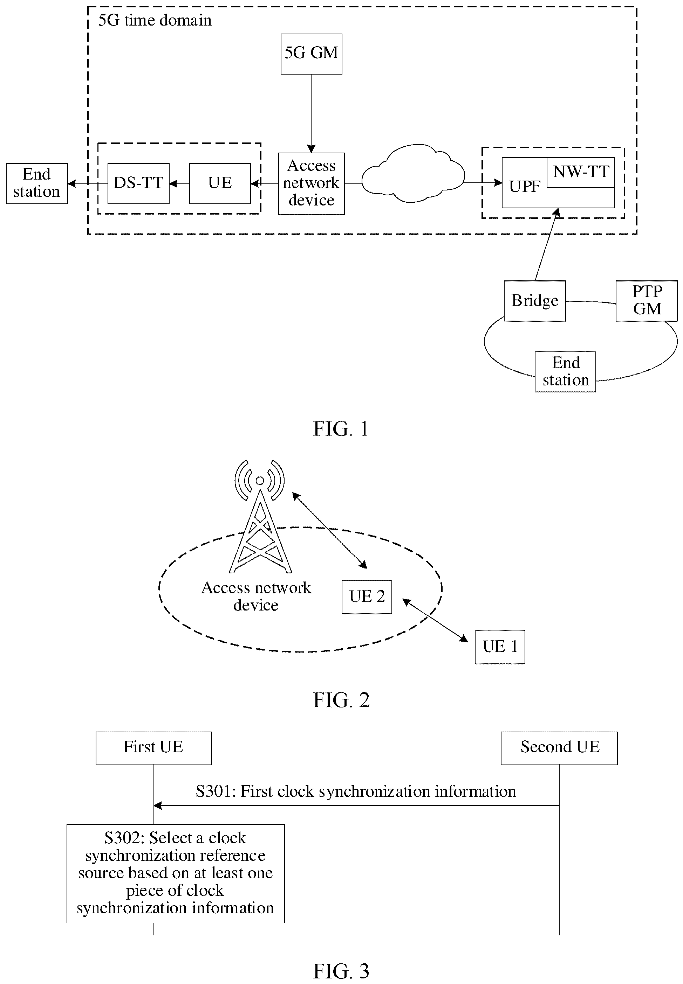

FIG. 1 is a diagram of a network architecture in which a 5G network adapts to a TSN. A 5G time domain in FIG. 1 is a 5G network, and may be used as a logical node of the TSN. A master clock (grand master, GM) is set in a 5G core network. In the 5G network, both a core network device and an access network device can implement clock synchronization with the 5G GM in a wired manner. A UE in the 5G network is in a coverage area of the access network device. Therefore, the UE can also implement clock synchronization with a base station. In other words, clock synchronization with the 5G GM may be implemented in the 5G network. Therefore, the 5G network may be used as a part of the TSN. The TSN also has a master clock, which is a precision time protocol (precision time protocol, PTP) GM in FIG. 1. A device in the TSN may implement clock synchronization with the PTP GM. In addition, the TSN further includes devices such as an end station (end station) and a bridge (bridge).

It is assumed that the 5G network receives a data packet for clock synchronization. For example, a network TSN translator (network TSN translator, NW-TT) on a UPF side receives the data packet. The data packet carries a timestamp A of an external network (for example, the TSN), and the timestamp A is used by another device (for example, an end station (end station) on the left in FIG. 1) to complete clock synchronization. After receiving the data packet, the NW-TT adds a timestamp in the 5G network, for example, TSi, to the data packet, and then sends the data packet with the timestamp in the 5G network to the UE through the access network device. It is assumed that the UE receives the data packet at a time point TSe in the 5G network. When forwarding the data packet through a device-side TSN translator (device-side TSN translator, DS-TT) of the UE, the UE updates the timestamp A of the data packet to A+TSe-TSi+B, where B is processing time between the UE and the DS-TT. Through the time conversion process, a timestamp received by the end station on the left in FIG. 2 can correspond to a time point at which the end station receives information. It can be learned that because clock synchronization is implemented in the 5G network, the 5G network can adapt to the TSN, and therefore, a mobile communication requirement and a clock synchronization requirement of some devices in the TSN or a network supporting TSC can be met. If clock synchronization cannot be implemented in the 5G network, the 5G network cannot adapt to the TSN, and application of the TSN or the network supporting the TSN is limited. For example, a device having a mobile communication requirement may fail to perform synchronization in the TSN or the network supporting TSC.

It can be learned that, currently, a UE outside the coverage area of the access network device cannot implement clock synchronization with the 5G network, and internal communication of the 5G network and application of the 5G network may be affected. A 5G network in this embodiment of this application may include not only communication between a UE and an access network device and communication between a UE and a core network device, but also direct communication between devices, for example, communication through a PC5 interface, a proximity service (proximity service, ProSe), or sidelink (sidelink, SL) communication. When there is only direct communication between devices in the 5G network, there is still a clock synchronization requirement in the 5G network, that is, there is still a clock synchronization requirement between the devices, for example, to support a service, for example, cooperative transporting.

It should be noted that, in this embodiment of this application, a sidelink, PC5, and the ProSe each may indicate a manner of direct communication between terminal devices, and may be interchangeable.

In view of this, in this embodiment of this application, the UE can also send clock synchronization information. For example, although a UE outside a coverage area of the access network device cannot receive clock synchronization information from the access network device, the UE may still receive clock synchronization information from another UE through the SL (the ProSe or the PC5 connection). However, the UE that sends the clock synchronization information may be a terminal device that has implemented clock synchronization with a network. Therefore, the UE outside the coverage area of the access network device can also implement synchronization with the network based on the clock synchronization information from the another UE, so that a probability of implementing clock synchronization between the UE and the network is increased. After clock synchronization is implemented between the UE and the network, an application range of the 5G network can also be expanded. For example, the 5G network can adapt to a TSN or a network supporting the TSN. In addition, the UE that sends the clock synchronization information may alternatively send the clock synchronization information by using the UE or a local clock as a clock synchronization reference source. Therefore, clock synchronization can also be implemented between a group of UEs outside the coverage area of the access network device. The group of UEs may support, based on a synchronized clock, some distributed applications, for example, cooperative transporting, that require clock synchronization outside the coverage area of the network.

The technical solutions provided in embodiments of this application may be applied to a 4th generation (4th generation, 4G) mobile communication technology system, for example, a long term evolution (long term evolution, LTE) system, may be applied to a 5G system, for example, a new radio (new radio, NR) system, or may be further applied to a next generation mobile communication system or another similar communication system, for example, a 6th generation (6th generation, 6G) mobile communication technology system. This is not specifically limited. In addition, the technical solutions provided in embodiments of this application may be applied to a device-to-device (device-to-device, D2D) scenario, for example, an NR-D2D scenario, or may be applied to a V2X scenario, for example, an NR-V2X scenario. For example, the technical solutions may be applied to fields such as intelligent driving, assisted driving or intelligent connected vehicles. For another example, the technical solutions may be further applied to a factory manufacturing scenario.

FIG. 2 is a communication network architecture to which an embodiment of this application is applied. FIG. 2 includes a UE 1, a UE 2, and an access network device. The UE 2 is in a coverage area of the access network device, and can implement clock synchronization with the access network device. The UE 1 is outside the coverage area of the access network device, and can also implement clock synchronization with the UE 2 based on the solutions provided in embodiments of this application. Alternatively, embodiments of this application may be further applied to another communication network architecture. For example, in a scenario in which there is no access network device but there is coverage of a satellite, the UE 2 can implement clock synchronization with the satellite if the UE 2 can receive a satellite signal, and the UE 1 can also implement clock synchronization with the UE 2 based on the solutions provided in embodiments of this application if the UE 1 can communicate with the UE 2. Alternatively, in a scenario in which there is neither an access network device nor a satellite, or in a scenario in which there is coverage of both an access network device and a satellite, the UE 1 and the UE 2 can implement clock synchronization based on the solutions provided in embodiments of this application.

To better describe embodiments of this application, the following describes, with reference to the accompanying drawings, a method provided in embodiments of this application.

Unless otherwise specified below, in the accompanying drawings corresponding to embodiments of this application, steps represented by dashed lines are all optional steps. The method provided in embodiments of this application may be applied to the network architecture shown in FIG. 2 or another network architecture. An example in which the method provided in embodiments of this application is applied to the network architecture shown in FIG. 2 is used. For example, a first UE in embodiments of this application may be the UE 1 in FIG. 2, or may be the UE 2 in FIG. 2.

An embodiment of this application provides a clock synchronization method. FIG. 3 is a flowchart of the method.

S301: At least one device sends at least one piece of clock synchronization information. Correspondingly, a first UE receives the at least one piece of clock synchronization information from the at least one device. Each of the at least one device may send one or more pieces of clock synchronization information.

The at least one device may include one or more of the following: a satellite device, an access network device, or a UE (which may also be understood as a terminal device) other than the first UE. If the at least one device includes another UE, the another UE may send clock synchronization information through an SL (or a PC5 connection, a ProSe connection, or the like), and the first UE may receive the clock synchronization information from the another UE through the SL. In FIG. 3, an example in which the at least one device includes a second UE is used. For example, the second UE sends first clock synchronization information through an SL between the second UE and the first UE. Different devices in the at least one device may simultaneously send clock synchronization information, or different devices in the at least one device may send clock synchronization information at different time points. The first UE may simultaneously receive the at least one piece of clock synchronization information, or the first UE may receive different clock synchronization information at different time points. This is not limited in this embodiment of this application.

Because the at least one device includes one or more of a satellite device, an access network device, or another UE, the at least one piece of clock synchronization information may include three types (or three categories) of clock synchronization information. A first type of clock synchronization information is from a UE other than the first UE, a second type of clock synchronization information is from an access network device, and a third type of clock synchronization information is from a satellite. For example, the first clock synchronization information is one piece of clock synchronization information in the first type of clock synchronization information, second clock synchronization information is one piece of clock synchronization information in the second type of clock synchronization information, and third clock synchronization information is one piece of clock synchronization information in the third type of clock synchronization information. The first clock synchronization information is from a UE, for example, the second UE. The second clock synchronization information is from an access network device, for example, a first access network device. The third clock synchronization information is from a satellite device, for example, a first satellite device. Optionally, the first satellite device corresponds to a global navigation satellite system. For example, the first satellite device includes one or more of the following satellite devices: a GPS, a BeiDou satellite, or a Galileo satellite. In addition, the first satellite device may further include another type of satellite device. The following describes the three types of clock synchronization information by using the first clock synchronization information, the second clock synchronization information, and the third clock synchronization information as examples.

The first clock synchronization information is from the second UE. In this case, the second UE may send the first clock synchronization information through the SL. For example, the first clock synchronization information is included in a PC5 clock synchronization message, or is included in another PC5 message. The first clock synchronization information includes, for example, information about a first moment (or a first timestamp). The information about the first moment may indicate a specific time point, for example, indicate XX hours, XX minutes, and XX seconds. Optionally, the first clock synchronization information may further include information about a first time unit, and the first time unit is, for example, a frame or a direct frame (referred to as a first direct frame) or a slot (referred to as a first slot). Information about the first direct frame may include a first direct frame number (direct frame number, DFN) of the first direct frame, and information about the first slot may include an index (index) of the first slot. The first moment is a moment of a boundary of the first time unit. For example, the first moment is a moment of a boundary of the first direct frame or a moment of a boundary of the first slot. The first DFN is, for example, a reference DFN. The first DFN may be determined by the second UE. For example, the second UE randomly selects a DFN as the first DFN. Alternatively, the second UE may determine a DFN as the first DFN based on indication information of a network device. The first slot is, for example, a reference slot. A manner of determining the first slot is similar to a manner of determining the first DFN. The boundary of the first time unit may be a start boundary or an end boundary of the first time unit. For example, the boundary of the first direct frame is, for example, a start boundary or an end boundary of the first direct frame, and the boundary of the first slot is, for example, a start boundary or an end boundary of the first slot. If the UE (for example, the first UE) that receives the first clock synchronization information selects the second UE as a clock synchronization reference source, the first UE may implement clock synchronization based on the first clock synchronization information. For example, the first UE may determine, based on the information about the first moment and the information about the first DFN that are included in the first clock synchronization information, that the moment of the boundary of the first direct frame is the first moment. In this way, the first UE implements clock synchronization with the second UE.

Optionally, the first time unit may be default, for example, a default (default) configuration in a protocol, or the first time unit may be predefined in a standard or configured based on higher layer information. For example, the first DFN or the first slot may be default, predefined in a standard, or configured based on higher layer information. In this case, the first clock synchronization information may not include the information about the first DFN or the first slot. For example, the standard predefines that the first direct frame is a closest direct frame whose DFN is 10, or a next direct frame whose DFN is 10. In this case, the first UE may also complete clock synchronization with the second UE based on the first clock synchronization information.

Optionally, the first clock synchronization information may further include error estimation information corresponding to the first moment. For example, the first clock synchronization information includes a clock synchronization variance corresponding to the first moment. For another example, the first clock synchronization information may include a confidence interval and a confidence level that correspond to the first moment.

Optionally, the first clock synchronization information may further include (or indicate) one or more of the following: type information of an initial clock synchronization reference source of the second UE, hop count information between the second UE and an initial clock synchronization reference source of the second UE, information about whether an initial clock synchronization reference source of the second UE completes time-frequency synchronization with the access network device, information about whether the second UE completes time-frequency synchronization with the access network device, or one or more unicast identifiers of the second UE. Content indicated by the first clock synchronization information may also be understood as that the first clock synchronization information may further include (or indicate) one or more of the following: clock synchronization priority information (which may be understood as a priority of the first clock synchronization information, or may be understood as a priority of the second UE as the clock synchronization reference source) or one or more unicast identifiers of the second UE. That the first clock synchronization information indicates a clock synchronization priority of the second UE may include one or more of the following: indicating a type of the initial clock synchronization reference source of the second UE, indicating a hop count between the second UE and the initial clock synchronization reference source of the second UE, or indicating whether the initial clock synchronization reference source of the second UE completes time-frequency synchronization with the access network device. Because information such as the initial clock synchronization reference source of the second UE and/or the hop count and whether the initial clock synchronization reference source of the second UE completes time-frequency synchronization with the access network device can reflect the clock synchronization priority of the second UE, it may be considered that the information is priority information. The type of the initial clock synchronization reference source may include a terminal device, an access network device (which may also be understood as a cell (cell), or may be understood as a network device or a 5G system), or a satellite device. Alternatively, another type of device may be used as the initial clock synchronization reference source. One piece of first clock synchronization information indicates that one of the foregoing types is used as the type of the initial clock synchronization reference source. Optionally, if the initial clock synchronization reference source of the second UE is a terminal device, the first clock synchronization information may further indicate whether the initial clock synchronization reference source completes time-frequency synchronization with the access network device.

The initial clock synchronization reference source of the second UE is a synchronization reference source that provides a clock for the second UE from a source. In addition, the second UE may further have a current clock synchronization reference source, which is also referred to as a direct clock synchronization reference source. Unless otherwise specified, the clock synchronization reference source described in embodiments of this application may be understood as a current or direct clock synchronization reference source. For example, if the second UE does not receive the clock synchronization information, the second UE may select a local clock of the second UE as the current clock synchronization reference source. In this case, the local clock of the second UE is also the initial clock synchronization reference source of the second UE. Alternatively, if the second UE receives clock synchronization information from another device, and the second UE selects a sending device of the received clock synchronization information as the current clock synchronization reference source, an initial clock synchronization reference source of the another device is also the initial clock synchronization reference source of the second UE. For example, the initial clock synchronization reference source of the another device may be a terminal device, an access network device, or a satellite device. For the UE, the current clock synchronization reference source and the initial clock synchronization reference source may be a same device, or may be different devices.

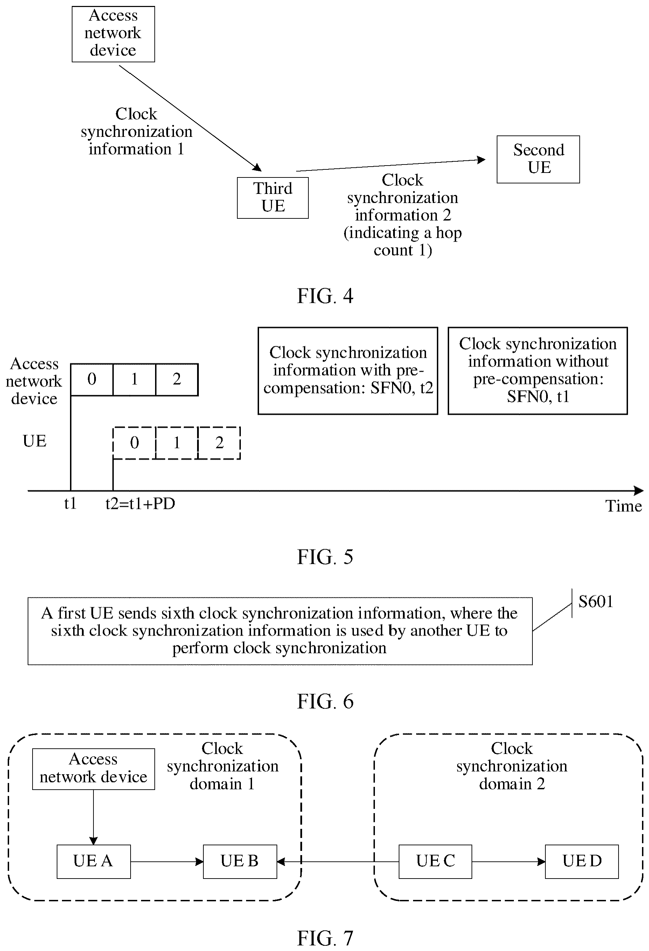

Refer to FIG. 4. For example, an access network device sends clock synchronization information 1, and a third UE receives the clock synchronization information 1. The second UE is not in a coverage area of the access network device, and therefore cannot receive the clock synchronization information 1. After receiving the clock synchronization information 1, the third UE selects the access network device as a current clock synchronization reference source or a direct clock synchronization reference source, and the access network device is also an initial clock synchronization reference source of the third UE. A clock of the access network device may be determined with reference to a global positioning system (global positioning system, GPS) or another clock. However, the initial clock synchronization reference source in this embodiment of this application may be understood as an initial clock synchronization reference source for an SL network. Therefore, a specific manner of determining a clock synchronization reference source by the access network device is not described in this embodiment of this application. In other words, even if the access network device has a further clock synchronization reference source, in this embodiment of this application, the access network device is still used as the initial clock synchronization reference source of the third UE. After completing clock synchronization with the access network device, the third UE may send clock synchronization information 2. The second UE can receive the clock synchronization information 2 from the third UE, and implement clock synchronization with the third UE based on the clock synchronization information 2. In this case, the third UE is a current clock synchronization reference source of the second UE, and the access network device is the initial clock synchronization reference source of the third UE. Therefore, the access network device is also an initial clock synchronization reference source of the second UE. In addition, if the access network device is replaced with a satellite device, or the access network device is replaced with a fourth UE, the foregoing reference source relationship is also established.

The hop count between the second UE and the initial clock synchronization reference source of the second UE may represent a quantity of clock synchronization information sending processes before the second UE receives the clock synchronization information from the initial clock synchronization reference source. Optionally, the first clock synchronization information indicates the hop count between the second UE and the initial clock synchronization reference source of the second UE. In an optional indication manner, a specific hop count is directly indicated. FIG. 4 is still used as an example. The access network device sends clock synchronization information A (for example, the foregoing second type of clock synchronization information), and the third UE receives the clock synchronization information A. Then, the third UE sends clock synchronization information B (for example, the foregoing first type of clock synchronization information) based on the clock synchronization information A, and the second UE receives the clock synchronization information B. In this case, the initial clock synchronization reference source of the third UE is the access network device, and a hop count that is between the third UE and the access network device and that is indicated by the clock synchronization information B may be 0 or 1. If the second UE sends clock synchronization information to another UE, the clock synchronization information may indicate that the initial clock synchronization reference source of the second UE is the access network device, and the hop count between the second UE and the initial clock synchronization reference source of the second UE is 1 or 2. Alternatively, when the second UE uses the local clock of the second UE as the clock synchronization reference source, the clock synchronization information sent by the second UE to the another UE may indicate that the type of the initial clock synchronization reference source of the second UE is a terminal device, and the hop count indicated by the clock synchronization information is 0.

Alternatively, the first clock synchronization information indicates the hop count between the second UE and the initial clock synchronization reference source of the second UE. In another optional indication manner, a range to which the hop count belongs is indicated. For example, the hop count is divided into at least two ranges in advance, where each range includes at least one hop count, and quantities of hop counts included in different ranges are the same or different. The first clock synchronization information may indicate the range to which the hop count between the second UE and the initial clock synchronization reference source of the second UE belongs. For example, the hop count ranges obtained through division include a range 1 and a range 2. The range 1 includes a hop count 0 to a hop count 3, and the range 2 includes a hop count 4 and a hop count 5. If the hop count between the second UE and the initial clock synchronization reference source of the second UE is 2, the first clock synchronization information may indicate the range 1. For another example, the hop count ranges obtained through division include a range 1 and a range 2. The range 1 includes a hop count 1, and the range 2 includes a hop count 1 to positive infinity. For another example, the hop count ranges obtained through division include a range 1, a range 2, and a range 3. The range 1 includes a hop count 0, the range 2 includes a hop count 1, and the range 3 includes a hop count 2 to positive infinity. For a specific hop count, the range to which the hop count belongs is small. Therefore, indicating the range to which the hop count belongs helps reduce signaling overheads.

The initial clock synchronization reference source of the second UE may have completed time-frequency synchronization with the access network device, or may not complete time-frequency synchronization with the access network device. Therefore, optionally, the first clock synchronization information may indicate whether the initial clock synchronization reference source of the second UE completes time-frequency synchronization with the access network device, or indicate whether the initial clock synchronization reference source of the second UE completes synchronization signal and physical broadcast channel (physical broadcast channel, PBCH) block (synchronization signal and PBCH block, SSB) synchronization with the access network device, or indicate whether the initial clock synchronization reference source of the second UE detects a cell, or indicate whether the initial clock synchronization reference source of the second UE camps on a cell. In the following description process, time-frequency synchronization is used as an example for description. To be specific, "time-frequency synchronization" in the following may alternatively be replaced with "SSB synchronization", "detecting a cell", or "camping on a cell". For example, the second UE (or the initial clock synchronization reference source of the second UE) may perform time-frequency synchronization with the access network device by receiving an SSB from the access network device. The time-frequency synchronization may include a synchronization process, for example, symbol synchronization, slot synchronization, frame synchronization, and frequency synchronization.

For example, the first clock synchronization information includes indication information of 1 bit (bit). A value of the bit being "0" indicates that the initial clock synchronization reference source of the second UE does not complete time-frequency synchronization with the access network device. The value of the bit being "1" indicates that the initial clock synchronization reference source of the second UE has completed time-frequency synchronization with the access network device. The UE (for example, the first UE) that receives the first clock synchronization information may determine, based on the value of the indication information included in the first clock synchronization information, whether the initial clock synchronization reference source of the second UE completes time-frequency synchronization with the access network device. Alternatively, if the initial clock synchronization reference source of the second UE has completed time-frequency synchronization with the access network device, the first clock synchronization information may indicate that the initial clock synchronization reference source of the second UE completes time-frequency synchronization with the access network device. For example, the first clock synchronization information includes the indication information that indicates that the initial clock synchronization reference source of the second UE completes time-frequency synchronization with the access network device. However, if the initial clock synchronization reference source of the second UE does not complete time-frequency synchronization with the access network device, the first clock synchronization information may not indicate, for example, does not include, the indication information. The UE (for example, the first UE) that receives the first clock synchronization information may determine, depending on whether the first clock synchronization information includes the indication information, whether the initial clock synchronization reference source of the second UE completes time-frequency synchronization with the access network device. For example, if the initial clock synchronization reference source of the second UE is the local clock of the second UE, the first clock synchronization information may indicate whether the second UE completes time-frequency synchronization with the access network device. In this case, if the second UE completes time-frequency synchronization with the access network device, although the second UE does not receive the clock synchronization information from the access network device, the second UE implements time-frequency synchronization with the access network device. This helps improve clock precision of the second UE.

Optionally, only when the type of the initial clock synchronization reference source of the second UE is a terminal device (including that the initial clock synchronization reference source of the second UE is the second UE), the first clock synchronization information includes the information about whether the initial clock synchronization reference source of the second UE completes time-frequency synchronization with the access network device. Alternatively, it may be understood that, only when the type of the initial clock synchronization reference source of the second UE is a terminal device, the information that is about whether the initial clock synchronization reference source of the second UE completes time-frequency synchronization with the access network device and that is included in the first clock synchronization information has practical meanings.

Optionally, the first clock synchronization information may indicate whether a transmit end (for example, the second UE) of the first clock synchronization information completes time-frequency synchronization with the access network device, or indicate whether the second UE completes synchronization signal and physical broadcast channel (physical broadcast channel, PBCH) block (synchronization signal and PBCH block, SSB) synchronization with the access network device, or indicate whether the second UE detects a cell, or indicate whether the second UE camps on a cell.

Optionally, the first clock synchronization information may indicate a priority by using a plurality of fields (where for example, the plurality of fields include a field that indicates a type of an initial clock synchronization reference source, a field that indicates a hop count, and a field that indicates whether an initial clock synchronization reference source completes time-frequency synchronization), or may indicate the priority by using a priority field. For example, different values or different codepoints (codepoints) of the priority field indicate a clock synchronization priority, and also indicates information such as the type of the initial clock synchronization reference source and the hop count. Table 1 is an example of the priority field. Specific information corresponding to the priority in this embodiment of this application may include one or more items (for example, one or more items in a second column to a fourth column) in Table 1, or may include an item other than the item in Table 1. Table 1 may be pre-configured or configured by the access network device or a core network device.

**Table 1**

| Clock synchronization priority (priority) | Type of the initial clock synchronization reference source | Hop count from the initial clock synchronization reference source | Whether the initial clock synchronization reference source (when the reference source is a terminal device) completes time-frequency synchronization with the access network device |
|---|---|---|---|
| 0 | Satellite | 1 | |
| 1 | Terminal device | 1 | Yes |
| 2 | Access network device | 1 | |

In SL communication, a UE may use different source identifiers, for example, source identity numbers (IDs), on different communication links. For example, a source identifier used by a UE in unicast communication is referred to as a unicast identifier of the UE, or referred to as a unicast source identifier of the UE; and a source identifier used by the UE in multicast communication is referred to as a multicast identifier of the UE, or referred to as a multicast source identifier of the UE. A unicast identifier of a UE and a multicast identifier of the UE may be different identifiers. Multicast identifiers used by a same UE in multicast communication of different services may be different. In addition, unicast identifiers used by a UE in unicast communication with different UEs may also be different. Optionally, when sending information, the UE may indicate a source identifier of the UE in 2nd-stage sidelink control information (2nd-stage sidelink control information, SCI2) and a packet header (header) of a media access control (media access control, MAC) layer. Therefore, optionally, if the first clock synchronization information is multicast information or broadcast information, or the first clock synchronization information is sent in a multicast manner or a broadcast manner, the first clock synchronization information may further include one or more unicast identifiers of the second UE, so that a receive end (for example, the first UE) of the first clock synchronization information can match the first clock synchronization information with other information of the second UE. This content is described below. Alternatively, when the first clock synchronization information is sent based on a unicast identifier, the first clock synchronization information may include another unicast identifier of the transmit end of the first clock synchronization information.

The second clock synchronization information is from the access network device, for example, a first access network device. The first access network device may send the second clock synchronization information through a Uu interface. For example, the second clock synchronization information includes information about a second moment (or a second timestamp). The information about the second moment may indicate a specific time point, for example, indicate XX hours, XX minutes, and XX seconds. Optionally, the second clock synchronization information may further indicate a first system frame or a first system information-window. The second moment may be a moment of a boundary of the first system frame, and the second clock synchronization information may include frame number information of the first system frame, for example, a first system frame number (system frame number, SFN). Alternatively, the second moment is a moment of a boundary of the first system information-window (system information-window, SI-window), and the first system information-window is for determining transmission time of first system information. The first SFN is, for example, a reference SFN, and the first SFN may be determined by the first access network device. For example, the first access network device determines an SFN as the first SFN. The first SI-window is, for example, a reference SI-window, and the first SI-window may be determined by the first access network device. For example, the first access network device determines an SI-window corresponding to a piece of system information as the first SI-window, or the first access network device selects an SI-window corresponding to the first system information as the first SI-window. The first system information is described below. For example, the first UE may determine a time domain position of the boundary of the first system frame based on information that is about the moment of the boundary of the first system frame and that is included in the second clock synchronization information, and may determine that a time domain position of a boundary of the first SFN is the second moment. In this way, the first UE implements clock synchronization with the first access network device.

The first system information-window may be for transmission of the first system information. For example, the second clock synchronization information may be included in a system information block (system information block, SIB), the second clock synchronization information is, for example, reference time information (ReferenceTimeInfo) in the SIB, and ReferenceTimeInfo may indicate an end position of an SI-window or indicate a moment of a boundary of a radio frame of the end position. Different system information may be sent by using respective SI-windows. The SI-window indicated by ReferenceTimeInfo may be the SI-window corresponding to the first system information. The first system information is, for example, a SIB, for example, a SIB9, for sending ReferenceTimeInfo. For another example, the second clock synchronization information may be included in a downlink information transfer (DL information transfer) message. The second clock synchronization information is, for example, ReferenceTimeInfo in the DL information transfer. ReferenceTimeInfo may indicate a moment of an end position of a radio frame. When the first UE is in the coverage area of the access network device, the first UE can receive the clock synchronization information from the access network device. When the first UE is outside the coverage area of the access network device, the first UE cannot receive the clock synchronization information from the access network device. If the first UE is in the coverage area of the access network device, the first UE may receive the clock synchronization information from the access network device, or may not receive the clock synchronization information from the access network device. To be specific, in this embodiment of this application, some UEs may complete time-frequency synchronization (or complete cell camping) with the access network device by using an SSB, but do not complete clock synchronization with the access network device, for example, when the access network device does not have a function of sending the SIB or the DL information transfer message including ReferenceTimeInfo. Optionally, in this embodiment of this application, the access network device may also be understood as a cell (cell).

The third clock synchronization information is from a satellite device, for example, the first satellite device. For descriptions of the first satellite device, refer to the foregoing descriptions. The third clock synchronization information is, for example, a global navigation satellite system (global navigation satellite system, GNSS) signal. Generally, the GNSS signal needs to be a reliable GNSS signal. For example, when the UE is located indoors, a received GNSS signal is generally weak, and consequently, the GNSS signal may be unreliable. A specific method and a criterion for determining, by the UE, whether the GNSS signal is reliable are not limited in this embodiment of this application. For example, whether the GNSS signal is reliable may be determined with reference to a related criterion in an existing standard.

S302: The first UE selects a clock synchronization reference source based on the at least one piece of clock synchronization information. Alternatively, the first UE selects a current clock synchronization reference source based on the at least one piece of clock synchronization information. Because the at least one piece of clock synchronization information is from the at least one device, S302 may alternatively be replaced with: The first UE selects a clock synchronization reference source or selects a current clock synchronization reference source from the at least one device. Alternatively, S302 may be replaced with: The first UE selects one piece of clock synchronization information from the at least one piece of clock synchronization information as a clock synchronization reference source. In other words, this may be understood as that the UE selects a device as the clock synchronization reference source, or this may be understood as that the UE selects clock synchronization information as the clock synchronization reference source.

For example, the first UE may select, from the at least one device, a first device as the current clock synchronization reference source based on the at least one piece of clock synchronization information. The first device is, for example, a device with a highest clock synchronization priority in the at least one device. For example, the first device is a UE other than the first UE, an access network device, or a satellite device. Therefore, this may also be understood as that the first UE selects, from the at least one device, the first device as the current clock synchronization reference source based on a clock synchronization priority of the at least one device. In other words, the first UE may select a clock synchronization reference source based on a clock synchronization priority of a device, to synchronize with a device with a higher clock synchronization priority as much as possible. This helps improve clock synchronization precision of the first UE, and can also resolve a problem of a conflict between a plurality of clock synchronization reference sources that are not synchronized.

Optionally, the devices may be divided into different priority groups, and different priority groups correspond to different clock synchronization priorities. For example, the priority groups obtained through division include a priority group 1 to a priority group 5, and different priority groups correspond to different clock synchronization priorities. In the at least one device, if a device belongs to a specific priority group, a clock synchronization priority of the device may be determined based on a clock synchronization priority corresponding to the priority group. The priority group 1 includes a satellite device; the priority group 2 includes a UE that uses the satellite device as an initial clock synchronization reference source; the priority group 3 includes an access network device; the priority group 4 includes a UE that uses the access network device as an initial clock synchronization reference source; and the priority group 5 includes a UE that uses a terminal device as an initial clock synchronization reference source. Alternatively, the priority group 1 includes a satellite device; the priority group 2 includes a UE that uses the satellite device as a direct clock synchronization reference source; the priority group 3 includes an access network device; the priority group 4 includes a UE that uses the access network device as a direct clock synchronization reference source; and the priority group 5 includes a UE that uses a terminal device as a direct clock synchronization reference source.

For example, a sequence of the clock synchronization priorities of the five priority groups in descending order is: the priority group 1 > the priority group 2 > the priority group 3 > the priority group 4 > the priority group 5. For example, if GNSS (GNSS-based) has a highest clock synchronization priority, the clock synchronization priority of the at least one device may be determined in this sequence.

Alternatively, the sequence of the clock synchronization priorities of the five priority groups in descending order may be: the priority group 3 > the priority group 4 > the priority group 1 > the priority group 2 > the priority group 5. For example, if the access network device, for example, a gNB (gNB-based), has a highest clock synchronization priority, the clock synchronization priority of the at least one device may be determined in this sequence.

The first UE may receive clock synchronization signals corresponding to all of the five priority groups, and may determine the clock synchronization priority based on one of the foregoing sequences. Alternatively, the first UE may receive clock synchronization signals corresponding to some of the five priority groups, and may still determine the clock synchronization priority based on one of the foregoing sequences.

In the foregoing sequences of the clock synchronization priority groups, "a>b" indicates that a clock synchronization priority corresponding to a is greater than or higher than a clock synchronization priority corresponding b. For example, the priority group 1 > the priority group 2 indicates that a clock synchronization priority corresponding to a device in the priority group 1 is higher than a clock synchronization priority corresponding to a device in the priority group 2.

The foregoing sequence in which the first UE determines the clock synchronization priority of the at least one device may be specified in a protocol, or may be configured by a higher layer of the first UE, or may be pre-configured in the first UE, or may be configured by the access network device (where for example, the access network device may send configuration information to the first UE to configure the sequence), or may be configured by the core network device, for example, may be configured by a PCF. A specific manner of determining, by the first UE, a sequence to be used is not limited in this embodiment of this application.

For example, the first UE determines the clock synchronization priority in an GNSS-based manner, and receives the first clock synchronization information from the second UE, the second clock synchronization information from the first access network device, and the third clock synchronization information from the first satellite device. The first clock synchronization information indicates that the type of the initial clock synchronization reference source of the second UE is an access network device. It can be learned from the first sequence of the clock synchronization priorities of the priority groups described above that, in the satellite device, the access network device, and the second UE, the satellite device has a highest clock synchronization priority; in this case, the first UE may select the first satellite device as the current clock synchronization reference source.

Based on the foregoing sequences of the clock synchronization priorities, if different devices in the at least one device may belong to different priority groups, the first UE selects, from the at least one device, a device with a highest clock synchronization priority as the first device. Alternatively, a plurality of devices in the at least one device may belong to a same priority group. If a clock synchronization priority of the priority group is higher than a clock synchronization priority of a priority group to which a remaining device in the at least one device belongs, in other words, the plurality of devices are devices with a highest clock synchronization priority in the at least one device, the first UE may select a device from the plurality of devices as the first device. For example, the first UE may randomly select one device from the plurality of devices as the first device. Alternatively, clock synchronization priorities may be further distinguished for devices belonging to a same priority group, to be specific, clock synchronization priorities at a finer granularity may be further divided for devices belonging to a same priority group, so that the first UE may select a device with a highest clock synchronization priority from the plurality of devices as the first device.

For example, the first UE may determine, based on any one or more of the following factors, clock synchronization priorities of devices belonging to a same priority group: whether the device or an initial clock synchronization reference source of the device completes time-frequency synchronization with the access network device, a hop count indicated by clock synchronization information, or received power of clock synchronization information sent by the device.

For example, the at least one piece of clock synchronization information includes the first clock synchronization information and fourth clock synchronization information. The first clock synchronization information is from the second UE, and the fourth clock synchronization information is from a third UE. The first clock synchronization information indicates that the type of the initial clock synchronization reference source of the second UE is a UE (for example, the second UE) or a local clock of the UE. The fourth clock synchronization information indicates that a type of an initial clock synchronization reference source of the third UE is a UE (for example, the third UE) or a local clock of the UE. It can be learned that, if the foregoing sequences of the clock synchronization priorities are used, the second UE and the third UE belong to a same priority group, and both belong to the priority group 5. In this case, the first UE may determine clock synchronization priorities of the second UE and the third UE depending on whether a device (that is, a transmit end of clock synchronization information) or an initial clock synchronization reference source of the device completes time-frequency synchronization with the access network device. For example, if the first clock synchronization information indicates that the initial clock synchronization reference source of the second UE completes time-frequency synchronization with the access network device, and the fourth clock synchronization information indicates that the initial clock synchronization reference source of the third UE does not complete time-frequency synchronization with the access network device, the first UE may determine that the clock synchronization priority of the second UE is higher than the clock synchronization priority of the third UE. Because the time-frequency synchronization may include a synchronization process, for example, symbol synchronization, slot synchronization, frame synchronization, and frequency synchronization, if the initial clock synchronization reference source of the second UE completes time-frequency synchronization with the access network device, although the initial clock synchronization reference source of the second UE does not receive the clock synchronization information from the access network device, the satellite device, or the like, the second UE implements time-frequency synchronization with the access network device. This helps improve clock precision of the initial clock synchronization reference source of the second UE. If the first UE selects the second UE as the clock synchronization reference source, clock precision of the first UE can also be improved.

For another example, the at least one piece of clock synchronization information includes the first clock synchronization information and fourth clock synchronization information. The first clock synchronization information is from the second UE, and the fourth clock synchronization information is from a third UE. The second UE and the third UE belong to a same priority group, or the type that is of the initial clock synchronization reference source of the second terminal device and that is indicated by the first clock synchronization information is the same as a type that is of an initial clock synchronization reference source of a third terminal device and that is indicated by the fourth clock synchronization information. For example, the first clock synchronization information indicates that the type of the initial clock synchronization reference source of the second UE is a satellite device, and the fourth clock synchronization information indicates that the type of the initial clock synchronization reference source of the third UE is a satellite device. Alternatively, the first clock synchronization information indicates that the type of the initial clock synchronization reference source of the second UE is an access network device, and the fourth clock synchronization information indicates that the type of the initial clock synchronization reference source of the third UE is an access network device. In addition, the first clock synchronization information indicates that the hop count between the second UE and the initial clock synchronization reference source of the second UE is a first quantity, and the fourth clock synchronization information indicates that a hop count between the third UE and the initial clock synchronization reference source of the third UE is a second quantity. For example, if the first quantity is less than the second quantity, the first UE may determine that the clock synchronization priority of the second UE is higher than a clock synchronization priority of the third UE. For example, a smaller hop count corresponding to a device indicates a shorter path for obtaining clock synchronization information by the device, and higher clock synchronization precision. Therefore, the first UE may determine that a clock synchronization priority of a device corresponding to a smaller hop count is higher.

For still another example, the at least one piece of clock synchronization information includes clock synchronization information A and clock synchronization information B. The clock synchronization information A is from a device 1, and the clock synchronization information B is from a device 2. For example, the device 1 is a UE other than the first UE, and the device 2 is a UE other than the first UE. Received power obtained by the first UE by measuring the clock synchronization information from the device 1 is a first value, and received power obtained by the first UE by measuring the clock synchronization information from the device 2 is a second value. For example, if the first value is greater than the second value, the first UE may determine that a clock synchronization priority of the device 1 is higher than a clock synchronization priority of the device 2. Higher received power obtained by the first UE by measuring a signal from a device indicates better signal quality of the device, and more UEs may be capable of receiving a clock synchronization signal from the device, to perform clock synchronization with the device. Therefore, the first UE may determine that a clock synchronization priority of the device is higher, so that a larger quantity of devices can perform clock synchronization with a same device, to improve consistency between the devices.

The received power may be represented by one or more of parameters such as reference signal received power (reference signal received power, RSRP), reference signal received quality (reference signal received quality, RSRQ), a signal to interference plus noise ratio (signal to interference plus noise ratio, SINR), or a signal to noise ratio. The first UE measures a signal from a device, for example, measures a demodulation reference signal (demodulation reference signal, DMRS) carried on a physical sidelink control channel (physical sidelink control channel, PSCCH) corresponding to clock synchronization information from the device, or measures a DMRS carried on a physical sidelink shared channel (physical sidelink shared channel, PSSCH) corresponding to clock synchronization information from the device, or may measure another signal corresponding to clock synchronization information from the device. The PSSCH corresponding to the clock synchronization information is, for example, a PSSCH that carries the clock synchronization information. The PSCCH corresponding to the clock synchronization information is, for example, for scheduling the PSSCH, and the PSSCH carries the clock synchronization information.

Optionally, the foregoing received power may be replaced with another parameter that can be for measuring link quality, for example, a signal to noise ratio or a signal to interference plus noise ratio.

In the priority group division manners described above, the priority groups are obtained through division based on a type of a clock synchronization reference source. In addition, devices may be divided into different priority groups based on another factor. For example, devices may be divided into different priority groups based on a hop count or a hop count range. This is not limited. An example in which the priority groups are obtained through division based on the hop count or the hop count range is used. When a hop count indicated by clock synchronization information sent by a UE belongs to a range, it may be considered that the UE and a UE that uses the UE as a clock synchronization reference source belong to a same priority group. For example, a UE whose hop count indicated by sent clock synchronization information is [a, b) is divided into a priority group 1, a UE whose hop count indicated by sent clock synchronization information is [b, c) is divided into a priority group 2, and a UE whose hop count indicated by sent clock synchronization information is [c, +∞) is divided into a priority group 3. a is an integer greater than or equal to 0, and a is less than b. b is a positive integer greater than a and less than c. c is a positive integer greater than b. b-a may be equal or not equal to c-b. A priority of the priority group 1 is higher than a priority of the priority group 2, and the priority of the priority group 2 is higher than a priority of the priority group 3. For example, if a=0, a UE whose hop count indicated by sent clock synchronization information is 0 is a UE that uses a local clock of the UE as a clock synchronization reference source, and the UE belongs to the priority group 1; and a UE whose hop count indicated by sent clock synchronization information is b does not use a local clock of the UE as a clock synchronization reference source, and the UE also belongs to the priority group 1. Alternatively, when clock synchronization information sent by a terminal device indicates that a type of an initial clock synchronization reference source of the terminal device is an access network device or a satellite device, and a hop count indicated by the clock synchronization information is greater than a specific range, it may be considered that the device and a terminal device that uses the terminal device as an initial clock synchronization reference source belong to a same priority group. This embodiment of this application may be naturally extended to another priority division rule and method, and the first UE may still determine, based on an extended priority sequence, a device with a highest priority as the clock synchronization reference source.

Optionally, after selecting the first device as the current clock synchronization reference source, the first UE may perform clock synchronization based on target clock synchronization information (that is, clock synchronization information sent by the first device to the first UE), or the first UE performs clock synchronization with the first device. Alternatively, in S302, that the first UE selects the first device as the current clock synchronization reference source may be considered as that the first UE performs clock synchronization with the first device. For example, that the first UE performs clock synchronization with the first device is considered as that the first UE selects the first device as the clock synchronization reference source. That the first UE performs clock synchronization with the first device may alternatively be considered as that an initial clock synchronization reference source of the first device (which is also an initial clock synchronization reference source of the first UE) performs clock synchronization. The first device may be the clock synchronization reference source selected by the first UE from the at least one device in S302. The first device may be the second UE, a UE other than the first UE and the second UE, an access network device, or a satellite device. The target clock synchronization information is from the first device. Alternatively, this is understood as that the first UE performs clock synchronization based on the target clock synchronization information in the at least one piece of clock synchronization information.

In an optional implementation, if the first device is the first satellite device, the target clock synchronization information may be a GNSS signal, or information that is included in a GNSS signal and that is for clock synchronization. For example, the target clock synchronization information is the third clock synchronization information. The first UE may directly determine a clock based on the target clock synchronization information, in other words, complete clock synchronization with the satellite device.

In another optional implementation, the first device is the first access network device. For example, the target clock synchronization information is the second clock synchronization information. If the target clock synchronization information includes ReferenceTimeInfo, the first UE may determine a clock of the access network device based on ReferenceTimeInfo, to complete clock synchronization with the first access network device. Alternatively, because there is an additional propagation delay (propagation delay, PD) in transmission between the first access network device and the UE, and an additional clock synchronization error is introduced, the first UE and the first access network device may perform propagation delay compensation (propagation delay compensation, PDC). To be specific, the first UE may complete clock synchronization with the access network device based on ReferenceTimeInfo and the PDC.

In a 5G network, a PDC mechanism between the UE and the access network device may be performed based on a timing advance (timing advance, TA) or round trip time (round trip time, RTT). The TA is a timing advance of a slot/symbol sent by the UE in an uplink direction relative to a slot/symbol received by the UE in a downlink direction. Generally, the TA may be approximately equal to twice the propagation delay between the UE and the access network device. The RTT is approximately equal to twice the propagation delay between the UE and the access network device. Both the TA and the RTT may be determined through measurement. For example, the TA may be determined by the access network device through measurement in a random access process of the UE and indicated by the access network device to the UE, and the RTT may be determined based on a measurement result of a positioning reference signal (positioning reference signal, PRS) between the access network device and the UE.

FIG. 5 is a diagram of PDC. From a perspective of an access network device side, a time point of a start moment of SFNO is t1. Because transmission between an access network device and a UE needs a specific propagation delay, from a perspective of a UE side, a time point of a start moment of SFNO corresponding to a receiving behavior of the UE is t2=t1+PD. The PD may be determined based on the foregoing TA or RTT. If the access network device performs pre-compensation based on the PD, the access network device may directly indicate to the UE that the time point of the start moment of receiving SFNO on the UE side (for example, based on ReferenceTimeInfo) is t2, and the UE does not need to perform compensation based on the PD. Alternatively, if the access network device does not perform pre-compensation based on the PD, the access network device may indicate to the UE that the time point of the start moment of sending SFNO on the access network device side is t1, and the UE compensates t1 based on the PD. Air interface clock synchronization between the access network device and the UE can be completed in the foregoing process. The foregoing uses an example in which clock synchronization is performed based on a time point corresponding to a start moment of an SFN. Alternatively, clock synchronization may be performed based on a time point corresponding to an end moment of an SFN. Details are not described.

In still another optional implementation, if the first device is a UE other than the first UE, for example, the second UE, the first UE may perform clock synchronization with the second UE based on the target clock synchronization information. In this case, the target clock synchronization information is, for example, the first clock synchronization information. The following uses the first clock synchronization information as an example. Optionally, the first UE may perform PDC with the second UE, to complete clock synchronization with the second UE based on a PDC result and the first clock synchronization information. As described above, the first clock synchronization information may include the one or more unicast identifiers of the second UE. For example, the one or more unicast identifiers include a unicast identifier of the second UE used when the second UE communicates with the first UE. In this case, the first UE may match the first clock synchronization information with an identifier of the second UE in unicast communication based on the unicast identifier, so that a PDC result measured and reported by the first UE and the second UE in the unicast communication can be combined with the first clock synchronization information, to implement more precise clock synchronization. Optionally, a PDC mechanism between the first UE and the second UE may be completed based on the RTT, and a process of performing PDC by the first UE and the second UE may be as follows:
1. The first UE sends configuration information 1 to the second UE based on a first unicast identifier included in the first clock synchronization information. The configuration information 1 may be for configuring a reference signal resource 1, for example, may be for configuring a transmission resource of the reference signal resource 1. After receiving the configuration information 1, the second UE can determine a configuration of the reference signal resource 1. The reference signal resource 1 is, for example, a PRS resource. The first unicast identifier is one of the one or more unicast identifiers included in the first clock synchronization information. When the second UE performs unicast communication with the first UE, the second UE uses the first unicast identifier as the identifier of the second UE.

Optionally, the configuration information 1 may be further for requesting the second UE to configure (or configure and send) a reference signal resource 2. Alternatively, the configuration information 1 may not need to request the second UE to configure (or configure and send) the reference signal resource 2, and the first UE may request, based on information other than the configuration information 1, the second UE to configure (or configure and send) the reference signal resource 2. The reference signal resource 2 is, for example, a PRS resource.

Optionally, the configuration information 1 may further request the second UE to report a time difference between a time point at which the second UE sends the reference signal resource 2 and a time point at which the second UE receives the reference signal resource 1. Alternatively, the first UE may request, based on information other than the configuration information 1, the second UE to report the time difference between a time point at which the reference signal resource 2 is sent and a time point at which the reference signal resource 1 is received. The reference signal resource 1 is a PRS to be sent by the first UE to the second UE.

Optionally, before sending the configuration information 1, the first UE may first establish a radio resource control (radio resource control, RRC) connection with the second UE, for example, establish an RRC connection with the second UE based on the foregoing first unicast identifier. After the RRC connection is established, the first UE may send the configuration information 1 through the RRC connection. Alternatively, the first UE may send the configuration information 1 in a process of establishing the RRC connection with the second UE.

It can be learned that the first UE may configure a reference signal (for example, a PRS) with the second UE based on the first unicast identifier, and/or configure reporting of a measurement result with the second UE based on the first unicast identifier. The measurement result is the time difference between the time point at which the reference signal resource 2 is sent and the time point at which the reference signal resource 1 is received, and the measurement result may be for determining a PD or RTT between the first UE and the second UE.

2. The second UE configures the reference signal resource 2 for the first UE. For example, the second UE sends configuration information 2 to the first UE, and the configuration information 2 may be for configuring the reference signal resource 2, for example, may be for configuring a transmission resource of the reference signal resource 2. After receiving the configuration information 2, the first UE can determine a configuration of the reference signal resource 2.

3. The first UE sends the reference signal resource 1 to the second UE. Correspondingly, the second UE receives the reference signal resource 1 from the second UE. The first UE may send the reference signal resource 1 to the second UE based on the configuration information 1, and the second UE may also receive the reference signal resource 1 based on the configuration information 1. The first UE may record a time point at which the first UE sends the reference signal resource 1 as t1, and the second UE may record a time point at which the second UE receives the reference signal resource 1 as t2.

4. The second UE sends the reference signal resource 2 to the first UE. Correspondingly, the first UE receives the reference signal resource 2 from the second UE. The second UE may send the reference signal resource 2 to the first UE based on the configuration information 2, and the first UE may also receive the reference signal resource 2 based on the configuration information 2. The second UE may record a time point at which the second UE sends the reference signal resource 2 as t3, and the first UE may record a time point at which the first UE receives the reference signal resource 2 as t4. 5. The second UE sends information about t3-t2 to the first UE. Correspondingly, the first UE receives t3-t2 from the second UE. t3-t2 is the time difference between the time point at which the reference signal resource 2 is sent and the time point at which the reference signal resource 1 is received. Optionally, the second UE may send the reference signal resource 2 and the information about t3-t2 in a same slot, or may separately send the reference signal resource 2 and the information about t3-t2 in different slots. Optionally, when reporting the information about t3-t2, the second UE may alternatively report only a time difference between the time point at which the second UE receives the reference signal resource 1 and a boundary of a reference slot or a boundary of a reference symbol. Because a time point at which a UE sends a reference signal is generally aligned with a slot or a symbol in an SL system, the first UE may determine a time difference between t3 and the boundary of the reference slot or the boundary of the reference symbol by detecting a slot or a symbol in which the reference signal resource 2 is located, to further determine t3-t2. Because the reference slot and the reference symbol may be defined to be very close to a position of a reference signal 1, a range of a reported value may be narrowed. The reference slot or the reference symbol is a slot or a symbol in which the reference signal resource 1 is located. For another example, the reference slot or symbol is a next slot of the slot in which the reference signal resource 1 is located or a next symbol of the symbol in which the reference signal resource 1 is located. A position of the reference slot or the reference symbol may be predefined in a standard, or may be configured based on higher layer information. A specific method for determining the reference slot or the reference symbol is not limited in this embodiment of this application.

The foregoing step 3 and step 4 may be performed after step 1 and step 2, or step 3 and step 4 may be performed before step 1 and step 2, or step 3 and step 4 and step 1 and step 2 may be performed simultaneously.

In the foregoing manner, the first UE and the second UE need to first establish an RRC connection based on the unicast identifier in the target clock synchronization information. To be specific, after the RRC connection is established, reference signal configuration and RTT measurement are performed based on the RRC connection. Alternatively, the first UE and the second UE may not need to establish an RRC connection. The following provides a propagation delay compensation method in which the first UE and the second UE do not need to establish an RRC connection (which may also be understood as not relying on unicast communication). The following continues to use an example in which the target clock synchronization information is the first clock synchronization information.
1. The first UE sends a first reference signal resource. Correspondingly, the second UE receives the first reference signal resource. A time-frequency pattern of the first reference signal resource and a specific sequence to be used may be configured at a system level, for example, predefined in a standard or determined based on resource pool configuration information. The resource pool configuration information may be pre-configured, or predefined in a standard, or configured by the access network device. The first UE sends scheduling information of the first reference signal resource and the first reference signal resource to the second UE. Specifically, SCI1 and/or SCI2 sent by the first UE to the second UE may include the scheduling information of the first reference signal resource. For example, 1 bit (bit) indicates that the first reference signal resource exists. The second UE determines, based on 1-bit information, that the first reference signal resource exists, and receives and measures a first reference signal based on the time-frequency pattern and sequence information that are predefined in a standard or configured in a resource pool.

Optionally, the first UE may further indicate at least one identifier of the second UE in a first PSCCH and/or a first PSSCH. The first PSCCH is associated with the first PSSCH. This may also be understood as that the first PSCCH is for scheduling the first PSSCH. For example, the at least one identifier may include a layer 2 source identity number (source ID) used when the second UE sends the first clock synchronization information to the first UE, or may include one of the one or more unicast identifiers included in the first clock synchronization information. The at least one identifier may be included in the SCI2 and/or a media access control (media access control, MAC) protocol data unit (protocol data unit, PDU), and the SCI2 and the MAC PDU are carried in the first PSSCH. Alternatively, the at least one identifier may be included in a first MAC control element (control element, CE), and the first MAC CE may also be carried in the first PSSCH. When the at least one identifier is detected by the second UE, the second UE may determine that the second UE needs to receive and measure the first reference signal resource, and determine that the second UE needs to perform step 2. The first PSCCH and/or the first PSSCH and the first reference signal resource may be located in a same time unit, for example, located in a same slot.

Optionally, the first UE may determine that a moment at which the first UE sends the first reference signal resource is t1.

Optionally, the second UE may determine that a moment at which the second UE receives the first reference signal resource is t2.

2. The second UE sends a second reference signal resource and a first measurement result to the first UE. The first measurement result is for determining the time difference between the time point at which the second UE receives the first reference signal resource and a time point at which the second UE sends the second reference signal resource, that is, t3-t2 above. Optionally, when reporting the information about t3-t2, the second UE may alternatively report only a time difference between the time point at which the second UE receives the reference signal resource 1 and a boundary of a reference slot or a boundary of a reference symbol. For a configuration manner of a time-frequency pattern of the second reference signal resource and a specific sequence to be used, refer to related descriptions of the first reference signal resource. The time-frequency pattern of the first reference signal resource and configuration information of the specific sequence to be used may be the same as or different from those of the second reference signal resource. This is not limited in this embodiment of this application. Specifically, SCI1 and/or SCI2 sent by the second UE to the first UE may include scheduling information of the second reference signal resource. For example, 1 bit indicates that the first reference signal resource exists. The first UE determines, based on 1-bit information, that the second reference signal resource exists, and receives and measures the second reference signal resource based on the time-frequency pattern and sequence information that are predefined in a standard or configured in a resource pool.

Optionally, the second UE may further indicate at least one identifier of the first UE in a second PSCCH or a second PSSCH. The second PSCCH is associated with the second PSSCH. This may also be understood as that the second PSCCH is for scheduling the second PSSCH. For example, the at least one identifier may include a layer 2 source ID used by the first UE in step 1. The at least one identifier may be included in the SCI2 and/or a MAC PDU, and the SCI2 and the MAC PDU are carried in the second PSSCH. Alternatively, the at least one identifier may be carried in a second MAC CE, and the second MAC CE may also be carried in the second PSSCH. When the at least one identifier is detected by the first UE, the first UE may determine that the first UE needs to receive and measure the first reference signal resource to perform propagation delay compensation. The second PSCCH and/or the second PSSCH and the first reference signal resource may be located in a same time unit, for example, located in a same slot.

Optionally, the second UE may determine that a moment at which the second UE sends the second reference signal resource is t3.

Optionally, the first UE may determine that a moment at which the first UE receives the second reference signal resource is t4.

Optionally, the second UE may further indicate the first measurement result in a third PSCCH or a third PSSCH. For example, the first measurement result is carried in the third PSCCH. For example, the third PSCCH includes third SCI1, and the third SCI1 includes information about the first measurement result. Alternatively, the first measurement result is carried in the third PSSCH. For example, the third PSSCH includes third SCI2, and the third SCI2 includes information about the first measurement result. Alternatively, the first measurement result may be carried in the second PSSCH. For example, the second PSSCH includes a third MAC CE, and the third MAC CE includes information about the first measurement result.

Optionally, a second measurement result may further include time-frequency position information of the first reference signal resource, for example, include a slot position of the first reference signal resource.

Optionally, the second UE may send the second measurement result and the reference signal resource 2 in a same slot (which may also be understood as that the second PSCCH and the third PSCCH are a same PSCCH and/or the second PSSCH and the third PSSCH are a same PSSCH), or may send the second measurement result and the reference signal resource 2 in different slots. When the second UE sends the second measurement result and the reference signal resource 2 in different slots, the at least one identifier of the first UE may be indicated in each slot by using the foregoing method.

In the foregoing steps, the first UE and the second UE complete a PDC process, and the first UE may obtain a PDC result through calculation. The PDC result is, for example, a PD or RTT between the first UE and the second UE. The PDC result is equal to (t4-t1-t3+t2)/2, so that the first UE may compensate, based on the PDC result, time indicated by the first clock synchronization information, to complete clock synchronization with the second UE.

The foregoing PDC process is an optional process. Because a distance between devices that perform communication through an SL is generally short, a propagation delay between terminal devices is small, and clock synchronization precision is not greatly affected.

Optionally, the first clock synchronization information may include position information of the second UE. The first UE may determine, based on a position of the first UE and a position of the second UE, whether PDC needs to be performed, or may directly estimate a propagation delay based on positions of the first UE and the second UE. The position of the second UE may be a position in a global coordinate system, or may be a position in a local coordinate system.

Optionally, after completing clock synchronization with the first device, the first UE may further continue to receive clock synchronization information from another device. If the first UE receives clock synchronization information sent by a device with a clock synchronization priority higher than that of the first device, the first UE may complete clock synchronization with the device with a higher clock synchronization priority, so that the first UE can complete clock synchronization with a clock synchronization reference source with a higher priority as much as possible, to improve clock synchronization precision.

For example, after determining that the first device is the current clock synchronization reference source, or after completing clock synchronization with the first device, the first UE receives fifth clock synchronization information from a second device. The second device is an access network device, a satellite device, or a UE other than the first UE. In this case, if a clock synchronization priority of the second device is higher than the clock synchronization priority of the first device, the first UE may select the second device as the current clock synchronization reference source.

For another example, when the first UE does not receive any clock synchronization information initially, a local clock of the first UE is used as the clock synchronization reference source. Then, the first UE receives fifth clock synchronization information from a second device, and the second device is an access network device, a satellite device, or a UE other than the first UE. In this case, the first UE may select the second device as the current clock synchronization reference source.

Optionally, if the first UE cannot receive the clock synchronization information from the first device within a time period, the first UE may alternatively perform clock synchronization with another device. For example, duration of the time period may be predefined in a standard, or may be configured by a network device, or may be implemented by a UE.

The foregoing process may also be understood as follows: After the first UE completes clock synchronization with the first device, if another clock synchronization reference source with a higher clock synchronization priority is detected by the first UE (for example, clock synchronization information from the clock synchronization reference source is received), or the first UE cannot receive the clock synchronization information from the first device within a time period, the first UE may consider that the first UE currently has no clock synchronization reference source, and may reselect a clock synchronization reference source based on related steps in this embodiment.

In this embodiment of this application, the UE can also send clock synchronization information. For example, although a UE outside the coverage area of the access network device cannot receive clock synchronization information from the access network device, the UE may still receive clock synchronization information from another UE through the SL. However, the UE that sends the clock synchronization information may be a UE that has implemented clock synchronization with a network. Therefore, the UE outside the coverage area of the access network device can also implement synchronization with the network based on the clock synchronization information from the another UE, so that a probability of implementing clock synchronization between the UE and the network is increased.

An embodiment of this application provides another clock synchronization method. FIG. 6 is a flowchart of the method.

S601: A first UE sends clock synchronization information, for example, referred to as sixth clock synchronization information. The sixth clock synchronization information may be used by another UE to perform clock synchronization. For example, the first UE may send the sixth clock synchronization information in a unicast, multicast, or broadcast manner. Optionally, the first UE may send the sixth clock synchronization information through an SL.

Before S601, the first UE has completed clock synchronization, and the first UE may perform S601. For example, this embodiment of this application may be applied in combination with the embodiment shown in FIG. 3. For example, before S601, the first UE receives at least one piece of clock synchronization information, and the first UE may complete clock synchronization with a first device based on target clock synchronization information in the at least one piece of clock synchronization information in the manner described in the embodiment shown in FIG. 3, where the target clock synchronization information is from the first device. The first device may be a UE other than the first UE, an access network device, or a satellite device. Alternatively, this embodiment of this application may not be combined with the embodiment shown in FIG. 3. For example, if the first UE may not receive any clock synchronization information before S601, the first UE may select a local clock of the first UE as a current clock synchronization reference source (where in this case, the local clock of the first UE may also be understood as an initial clock synchronization reference source of the first UE).

Optionally, even if the first UE completes clock synchronization, the first UE may perform S601 when a first condition is met. If the first UE does not meet the first condition, S601 may not need to be performed. For example, the first condition includes one or more of the following: The first UE is authorized to send clock synchronization information; received power corresponding to the target clock synchronization information is less than or equal to a first threshold; received power corresponding to the target clock synchronization information is greater than or equal to a second threshold; or the first UE does not select a device other than the first UE as a current clock synchronization reference source (which may also be understood as that the first UE has no current clock synchronization reference source or direct synchronization reference source).

For example, the first UE may be authorized by a network device to send the clock synchronization information, and the network device may be an access network device, or may be a core network device. Alternatively, the first UE may be authorized to send the clock synchronization information in a pre-configured manner. For example, a chip of the first UE stores information indicating that the first UE is authorized to send the clock synchronization information.

For another example, before S601, the first UE has received the target clock synchronization information from the first device, and performs clock synchronization with the first device based on the target clock synchronization information. In this case, if the received power corresponding to the target clock synchronization information is less than or equal to the first threshold, the first UE may send the sixth clock synchronization information. For example, the received power corresponding to the target clock synchronization information being less than or equal to the first threshold indicates that the first device is far away from the first UE. Therefore, the first UE may send the clock synchronization information, to expand coverage of the clock synchronization information, so that more devices can complete clock synchronization. For another example, the received power corresponding to the target clock synchronization information being greater than the second threshold indicates that the target clock synchronization information is reliable clock synchronization information. Therefore, the first UE may send the clock synchronization information, so that coverage of the clock synchronization information can be expanded, and another UE can be synchronized to a reliable clock synchronization reference source as much as possible. Optionally, the first threshold may be greater than or equal to the second threshold. The received power corresponding to the target clock synchronization information may be received power obtained by the first UE by measuring a signal from the first device. For content about a parameter for representing the received power and how the first UE performs measurement, refer to related descriptions of the embodiment shown in FIG. 3. Optionally, the foregoing received power may be replaced with another parameter that can be for measuring link quality, for example, a signal to noise ratio or a signal to interference plus noise ratio. The first threshold and/or the second threshold may be configured by the network device, or may be predefined in a standard, or may be pre-configured, or may be configured based on resource pool configuration information.

For another example, when the first UE does not receive any clock synchronization information, the first UE cannot select the current clock synchronization reference source. In this case, the first UE may send the clock synchronization information to another UE. After receiving the clock synchronization information of the first UE, the another UE may complete clock synchronization with the first UE.

The sixth clock synchronization information may include information about a third moment (or a third timestamp). The information about the third moment may indicate a specific time point, for example, indicate XX hours, XX minutes, and XX seconds. Optionally, the sixth clock synchronization information may further include information about a second time unit, and the second time unit is, for example, a frame or a direct frame (referred to as a second direct frame) or a slot (referred to as a second slot). Information about the second direct frame may include a second DFN, and information about the second slot may include an index of the second slot. The third moment is a moment of a boundary of the second time unit, for example, a moment of a boundary of the second DFN or a moment of a boundary of the second slot. The second DFN is, for example, a reference DFN. The second DFN may be determined by the first UE. For example, the first UE determines a DFN as the first DFN. Alternatively, the first UE may determine a DFN as the first DFN based on indication information of the network device. The second slot is, for example, a reference slot. A manner of determining the second slot is similar to a manner of determining the second DFN. The boundary of the second time unit may be a start boundary or an end boundary of the second time unit. For example, the boundary of the second DFN is a start boundary or an end boundary of the second DFN, and the boundary of the second slot is, for example, a start boundary or an end boundary of the second slot. If a UE that receives the sixth clock synchronization information selects the first UE as the current clock synchronization reference source, the UE may implement clock synchronization based on the sixth clock synchronization information. For example, the UE that receives the sixth clock synchronization information may determine, based on the information about the third moment and the information about the second slot that are included in the sixth clock synchronization information, that the moment of the boundary of the second slot is the third moment. In this way, the UE implements clock synchronization with the first UE.

Optionally, the second time unit may be default, predefined in a standard, or configured based on higher layer information. For example, the second DFN or the second slot may alternatively be default, predefined in a standard, or configured based on higher layer information. In this case, the sixth clock synchronization information may not include the information about the second DFN or the second slot. For example, the standard predefines that the second direct frame is a closest direct frame whose DFN is 10, or a next direct frame whose DFN is 10. In this case, the UE that receives the sixth clock synchronization information may also complete clock synchronization with the first UE based on the sixth clock synchronization information.

Optionally, the sixth clock synchronization information may further include error estimation information corresponding to the third moment. For example, the sixth clock synchronization information includes a clock synchronization variance corresponding to the third moment. For another example, the sixth clock synchronization information may include a confidence interval and a confidence level that correspond to the third moment.

Optionally, the sixth clock synchronization information may further include (or indicate) one or more of the following: type information of an initial clock synchronization reference source of the first UE, hop count information between the first UE and an initial clock synchronization reference source of the first UE, information about whether an initial clock synchronization reference source of the first UE completes time-frequency synchronization with the access network device, information about whether the first UE completes time-frequency synchronization with the access network device, or at least one unicast identifier of the first UE. For more descriptions of these parameters, refer to the embodiment shown in FIG. 3.

Optionally, before S601, the first UE may complete clock synchronization based on the target clock synchronization information.

When the first UE selects the access network device (for example, a first access network device) as the current clock synchronization reference source, if the sixth clock synchronization information includes the type information of the initial clock synchronization reference source, the sixth clock synchronization information may indicate that a type of the initial clock synchronization reference source of the first UE is an access network device. If the sixth clock synchronization information includes the hop count information between the first UE and the initial clock synchronization reference source of the first UE, the sixth clock synchronization information may indicate that a hop count between the first UE and the initial clock synchronization reference source of the first UE is 0 or 1. For content about how the first UE selects the access network device as the current clock synchronization reference source, refer to the embodiment shown in FIG. 3. Details are not described herein again.

When the first UE selects a satellite device (for example, a first satellite device) as the current clock synchronization reference source, if the sixth clock synchronization information includes the type information of the initial clock synchronization reference source, the sixth clock synchronization information may indicate that a type of the initial clock synchronization reference source of the first UE is a satellite device. If the sixth clock synchronization information includes the hop count information between the first UE and the initial clock synchronization reference source of the first UE, the sixth clock synchronization information may indicate that a hop count between the first UE and the initial clock synchronization reference source of the first UE is 0 or 1. For content about how the first UE selects the satellite device as the current clock synchronization reference source, refer to the embodiment shown in FIG. 3 in embodiments. Details are not described herein again.

When the first UE receives first clock synchronization information from another terminal device (for example, a second UE), and selects the second UE as the current clock synchronization reference source (that is, the target clock synchronization information is first clock synchronization information), if the sixth clock synchronization information includes the type information of the initial clock synchronization reference source of the first UE, the sixth clock synchronization information may indicate that a type of the initial clock synchronization reference source of the first UE is a first device type. The first device type is the type that is of the initial clock synchronization reference source and that is indicated by the first clock synchronization information. If the sixth clock synchronization information includes the hop count information between the first UE and the initial clock synchronization reference source of the first UE, the sixth clock synchronization information may indicate that a hop count between the first UE and the initial clock synchronization reference source of the first UE is k+1. k is a hop count that is between the second UE and an initial clock synchronization reference source of the second UE and that is indicated by the first clock synchronization information. Particularly, when k is a maximum hop count that can be indicated and that is between the second UE and the initial clock synchronization reference source, the sixth clock synchronization information may indicate that the hop count between the first UE and the initial clock synchronization reference source of the first UE is still k. If the sixth clock synchronization information includes the information about whether the initial clock synchronization reference source of the first UE completes time-frequency synchronization with the access network device, the first UE may determine, based on information that is about whether the initial clock synchronization reference source of the second UE completes time-frequency synchronization with the access network device and that is indicated by the first clock synchronization information, whether the initial clock synchronization reference source of the first UE completes time-frequency synchronization with the access network device. For example, if a type of the initial clock synchronization reference source of the second UE is a terminal device, and the first clock synchronization information indicates that the initial clock synchronization reference source of the second UE does not complete time-frequency synchronization with the access network device, the sixth clock synchronization information may indicate that the initial clock synchronization reference source of the first UE does not complete time-frequency synchronization with the access network device. For another example, if a type of the initial clock synchronization reference source of the second UE is a terminal device, and the first clock synchronization information indicates that the initial clock synchronization reference source of the second UE has completed time-frequency synchronization with the access network device, the sixth clock synchronization information may indicate that the initial clock synchronization reference source of the first UE has completed time-frequency synchronization with the access network device. For content about how the first UE selects another terminal device as the current clock synchronization reference source, refer to the embodiment shown in FIG. 3. Details are not described herein again.

Optionally, before S601, the first UE may alternatively complete clock synchronization based on a local clock of the first UE. In this case, the sixth clock synchronization information may indicate at least one of the following: the type of the initial clock synchronization reference source being a terminal device; whether the initial clock synchronization reference source of the first UE (that is, the first UE itself) completes time-frequency synchronization with the access network device; or the hop count between the first UE and an initial clock synchronization reference source of the first UE being 0.

For related content about whether the first UE completes time-frequency synchronization with the access network device, refer to related descriptions about whether the second UE completes time-frequency synchronization with the access network device in the embodiment shown in FIG. 3.

For an application process of the at least one unicast identifier of the first UE included in third clock synchronization information, refer to the descriptions of the application process of the unicast identifier of the second UE included in the first clock synchronization information in the embodiment shown in FIG. 3. Details are not described.

Optionally, after completing clock synchronization, the first UE may further continue to receive clock synchronization information from another device. If the first UE receives clock synchronization information sent by a device with a clock synchronization priority higher than that of the current clock synchronization reference source (for example, the first UE or the first device), the first UE may complete clock synchronization with the device with a higher clock synchronization priority, so that the first UE can complete clock synchronization with a clock synchronization reference source with a higher priority as much as possible, to improve clock synchronization precision.

For example, after completing clock synchronization, the first UE receives seventh clock synchronization information from a second device, and the second device is an access network device, a satellite device, or a UE other than the first UE. In this case, if a clock synchronization priority of the second device is higher than the clock synchronization priority of the first device, the first UE may select the second device as the current clock synchronization reference source. For another example, when the first UE does not receive any clock synchronization information initially, the local clock of the first UE is used as the clock synchronization reference source. Then, the first UE receives seventh clock synchronization information from a second device, and the second device is an access network device, a satellite device, or a UE other than the first UE. In this case, the first UE may select the second device as the current clock synchronization reference source. The process may occur after S601 or before S601. If the process occurs after S601, after completing clock synchronization with the second device, the first UE may further continue to send clock synchronization information, for example, referred to as eighth clock synchronization information. The eighth clock synchronization information may be determined based on the seventh clock synchronization information. For a determining manner, refer to the foregoing manner of determining the sixth clock synchronization information. Alternatively, if the process occurs before S601, the sixth clock synchronization information may be determined based on the seventh clock synchronization information, and is not determined based on the target clock synchronization information.

Optionally, if the first UE cannot receive the clock synchronization information from the first device (where the first device is the current clock synchronization reference source of the first UE) within a time period, the first UE may alternatively perform clock synchronization with another device. For example, duration of the time period may be predefined in a standard, or may be configured by a network device, or may be implemented by a UE.

The foregoing process may also be understood as follows: After the first UE completes clock synchronization with the first device, if another clock synchronization reference source with a higher clock synchronization priority is detected by the first UE (for example, clock synchronization information from the clock synchronization reference source is received), or the first UE cannot receive the clock synchronization information from the first device within a time period, the first UE may consider that the first UE currently has no clock synchronization reference source, and may reselect a clock synchronization reference source.

In this embodiment of this application, the UE can also send clock synchronization information. For example, although a UE outside a coverage area of the access network device cannot receive clock synchronization information from the access network device, the UE may still receive clock synchronization information from another UE through the SL. However, the UE that sends the clock synchronization information may be a UE that has implemented clock synchronization with a network. Therefore, the UE outside the coverage area of the access network device can also implement synchronization with the network based on the clock synchronization information from the another UE, so that a probability of implementing clock synchronization between the UE and the network is increased. In addition, in this embodiment of this application, even if a UE (for example, a UE outside a coverage area of an access network or a satellite device) that does not receive any clock synchronization information can complete clock synchronization based on a local clock of the UE, and the UE can send clock synchronization information after completing clock synchronization, so that adjacent devices can complete clock synchronization.

For example, FIG. 7 is a diagram of implementing clock synchronization by a UE according to an embodiment of this application. For example, initially, a UE C and a UE D are far away from a UE B, and the UE C and the UE D are also far away from an access network device. For example, the UE C and the UE D are outside a coverage area of the access network device, and two clock synchronization domains may be formed. The access network device in a clock synchronization domain 1 may send clock synchronization information 1 (a second type of clock synchronization information), so that a UE A performs clock synchronization with the access network device based on the clock synchronization information 1. After completing clock synchronization, the UE A may send clock synchronization information 2 (a first type of clock synchronization information), so that the UE B also indirectly performs clock synchronization with the access network device based on the clock synchronization information 2.

In a clock synchronization domain 2, because the UE C cannot receive the clock synchronization information, the UE C uses a local clock of the UE C as an initial clock synchronization reference source. In addition, the UE C may send clock synchronization information 3 (the first type of clock synchronization information), and the UE D may perform clock synchronization with the UE C based on the clock synchronization information 3.

It can be learned that, initially, an initial clock synchronization reference source of the clock synchronization domain 1 is the access network device, and an initial clock synchronization reference source of the clock synchronization domain 2 is the UE C. Therefore, clocks in the two clock synchronization domains may not be synchronized initially. However, because the two clock synchronization domains are far away from each other, the two clock synchronization domains do not interfere with each other. However, it is considered that the UE has mobility. For example, the UE C and the UE D may move near the UE B. In this case, the UE B may receive clock synchronization information from both the UE A and the UE C. However, a clock synchronization priority of the UE A is higher than a clock synchronization priority of the UE C. Therefore, the UE B still maintains clock synchronization with the access network device. In addition, the UE B may further send clock synchronization information 4 (the first type of clock synchronization information), so that the UE C and the UE D can perform clock synchronization with the access network device based on the clock synchronization information 4. It can be learned that according to the method provided in embodiments of this application, more devices can be synchronized to a same clock synchronization reference source, to improve clock consistency between the devices.

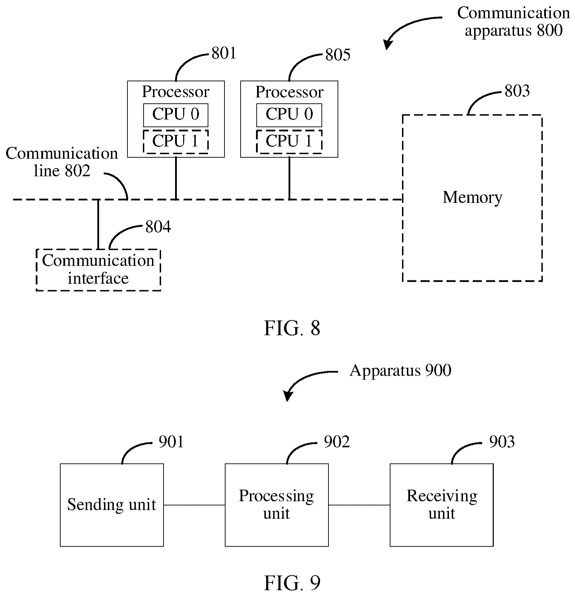

FIG. 8 is a diagram of a structure of a communication apparatus according to an embodiment of this application. The communication apparatus 800 may be the first UE in the embodiment shown in FIG. 3 or FIG. 6 or a circuit system of the first UE, and is configured to implement the method corresponding to the first UE in the foregoing method embodiments. For example, a circuit system is a chip system.

The communication apparatus 800 includes at least one processor 801. The processor 801 may be configured to perform internal processing of the apparatus, to implement a specific control processing function. Optionally, the processor 801 includes instructions. Optionally, the processor 801 may store data. Optionally, different processors may be independent components, may be located at different physical positions, or may be located on different integrated circuits. Optionally, different processors may be integrated into one or more processors, for example, integrated into one or more integrated circuits.

Optionally, the communication apparatus 800 includes one or more memories 803 configured to store instructions. Optionally, the memory 803 may further store data. The processor and the memory may be separately disposed, or may be integrated together.

Optionally, the communication apparatus 800 includes a communication line 802 and at least one communication interface 804. Because the memory 803, the communication line 802, and the communication interface 804 are all optional, the memory 803, the communication line 802, and the communication interface 804 are all represented by dashed lines in FIG. 8.

Optionally, the communication apparatus 800 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 800 through the antenna. Optionally, the transceiver includes a transmitter (transmitter) and a receiver (receiver). For example, the transmitter may be configured to generate a radio frequency (radio frequency) signal from a baseband signal, and the receiver may be configured to convert the radio frequency signal into the baseband signal.

The processor 801 may include a general-purpose central processing unit (central processing unit, CPU), a microprocessor, an application specific integrated circuit (application specific integrated circuit, ASIC), or one or more integrated circuits configured to control program execution of the solutions of this application.

The communication line 802 may include a path and transfers information between the foregoing components.

The communication interface 804 is configured to communicate, by using any apparatus like a transceiver, with another device or a communication network, for example, an ethernet, a radio access network (radio access network, RAN), a wireless local area network (wireless local area network, WLAN), or a wired access network.

The memory 803 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure that can be accessed by a computer, but is not limited thereto. The memory 803 may exist independently, and is connected to the processor 801 through the communication line 802. Alternatively, the memory 803 may be integrated with the processor 801.

The memory 803 is configured to store computer-executable instructions for executing the solutions of this application, and the processor 801 controls execution of the computer-executable instructions. The processor 801 is configured to execute the computer-executable instructions stored in the memory 803, to implement the steps performed by the first UE in the embodiment shown in FIG. 3 or FIG. 6.

Optionally, the computer-executable instructions in embodiments of this application may also be referred to as application program code. This is not specifically limited in embodiments of this application.

During specific implementation, in an embodiment, the processor 801 may include one or more CPUs, for example, a CPU 0 and a CPU 1 shown in FIG. 8.

During specific implementation, in an embodiment, the communication apparatus 800 may include a plurality of processors, for example, the processor 801 and a processor 805 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 8 is a chip, for example, a chip of the first UE, the chip includes the processor 801 (and may further include the processor 805), the communication line 802, and the communication interface 804, and optionally, may include the memory 803. Specifically, the communication interface 804 may be an input interface, a pin, a circuit, or the like. The memory 803 may be a register, a buffer, or the like. The processor 801 and the processor 805 each may be a general-purpose CPU, a microprocessor, an ASIC, or one or more integrated circuits configured to control program execution of the clock synchronization method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. For example, when each functional module is obtained through division based on each corresponding function, FIG. 9 is a diagram of an apparatus. The apparatus 900 may be the first UE in the foregoing method embodiments, or a chip in the first UE. The apparatus 900 includes a sending unit 901, a processing unit 902, and a receiving unit 903.

It should be understood that the apparatus 900 may be configured to implement steps performed by the first UE in the clock synchronization method in embodiments of this application. For related features, refer to any one of embodiments shown in FIG. 3 or FIG. 6. Details are not described herein again.

Optionally, functions/implementation processes of the sending unit 901, the receiving unit 903, and the processing unit 902 in FIG. 9 may be implemented by the processor 801 in FIG. 8 by invoking the computer-executable instructions stored in the memory 803. Alternatively, functions/implementation processes of the processing unit 902 in FIG. 9 may be implemented by the processor 801 in FIG. 8 by invoking the computer-executable instructions stored in the memory 803, and functions/implementation processes of the sending unit 901 and the receiving unit 903 in FIG. 9 may be implemented by the communication interface 804 in FIG. 8.

Optionally, when the apparatus 900 is a chip or a circuit, the functions/implementation processes of the sending unit 901 and the receiving unit 903 may alternatively be implemented by a pin, a circuit, or the like.

This application further provides a computer-readable storage medium. The computer-readable storage medium stores a computer program or instructions. When the computer program or the instructions are run, the method performed by the first UE in the foregoing method embodiments is implemented. In this way, the functions in the foregoing embodiments may be implemented in a form of a software functional unit and sold or used as an independent product. Based on such an understanding, the technical solutions of this application essentially, or a part having contributions, or some of the technical solutions may be implemented in a form of a software product. The computer software product is stored in a storage medium, and includes several instructions for instructing a computer device (which may be a personal computer, a server, a network device, or the like) to perform all or some of steps of the method described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first UE in any one of the foregoing method embodiments.

An embodiment of this application further provides a processing apparatus, including a processor and an interface. The processor is configured to perform the method performed by the first UE in any one of the foregoing method embodiments.

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, the procedure or functions described in embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state drive, SSD)), or the like.

Various illustrative logical units and circuits described in embodiments of this application may implement or operate the described functions by a general-purpose processor, a digital signal processor (digital signal processor, DSP), an ASIC, a field programmable gate array (field programmable gate array, FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, for example, a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to the processor, so that the processor can read information from the storage medium and write information to the storage medium. Optionally, the storage medium may be integrated into the processor. The processor and the storage medium may be disposed in an ASIC, and the ASIC may be disposed in a terminal device. Optionally, the processor and the storage medium may be disposed in different parts of a terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the first UE may perform some or all of the steps in embodiments of this application. These steps or operations are merely examples. In embodiments of this application, other operations or variants of various operations may be further performed. In addition, the steps may be performed in a sequence different from that presented in embodiments of this application, and not all operations in embodiments of this application may be performed.

## Claims

1. A clock synchronization method, applied to a first terminal device or a chip of the first terminal device, wherein the method comprises:
receiving at least one piece of clock synchronization information, wherein the at least one piece of clock synchronization information comprises first clock synchronization information, and the first clock synchronization information is received from a second terminal device through a sidelink; and
selecting a clock synchronization reference source based on the at least one piece of clock synchronization information.

2. The method according to claim 1, wherein the first clock synchronization information comprises:
information about a first moment and information about a first time unit, wherein the first moment is a moment of a boundary of the first time unit.

3. The method according to claim 2, wherein the first clock synchronization information further comprises one or more of the following:
type information of an initial clock synchronization reference source of the second terminal device;
hop count information between the second terminal device and an initial clock synchronization reference source of the second terminal device; or
information about whether an initial clock synchronization reference source of the second terminal device completes time-frequency synchronization with an access network device, wherein
a type of the initial clock synchronization reference source comprises access network device, satellite device, or terminal device.

4. The method according to any one of claims 1 to 3, wherein the at least one piece of clock synchronization information further comprises second clock synchronization information and/or third clock synchronization information, the second clock synchronization information is from a first access network device, and the third clock synchronization information is from a first satellite device; and selecting the clock synchronization reference source based on the at least one piece of clock synchronization information comprises:
selecting a first device as the clock synchronization reference source based on a clock synchronization priority of the second terminal device, and a clock synchronization priority of the first access network device and/or a clock synchronization priority of the first satellite device, wherein the first device is a device with a highest clock synchronization priority in the second terminal device, and the first access network device and/or the first satellite device.

5. The method according to claim 4, wherein a sequence of the clock synchronization priorities in descending order comprises:
a clock synchronization priority of a satellite device is higher than a clock synchronization priority of a terminal device that uses a satellite device as an initial clock synchronization reference source, a clock synchronization priority of a terminal device that uses a satellite device as an initial clock synchronization reference source is higher than a clock synchronization priority of an access network device, a clock synchronization priority of an access network device is higher than a clock synchronization priority of a terminal device that uses an access network device as an initial clock synchronization reference source, and a clock synchronization priority of a terminal device that uses an access network device as an initial clock synchronization reference source is higher than a clock synchronization priority of a terminal device that uses a terminal device as an initial clock synchronization reference source; or
a clock synchronization priority of an access network device is higher than a clock synchronization priority of a terminal device that uses an access network device as an initial clock synchronization reference source, a clock synchronization priority of a terminal device that uses an access network device as an initial clock synchronization reference source is higher than a clock synchronization priority of a satellite device, a clock synchronization priority of a satellite device is higher than a clock synchronization priority of a terminal device that uses a satellite device as an initial clock synchronization reference source, and a clock synchronization priority of a terminal device that uses a satellite device as an initial clock synchronization reference source is higher than a clock synchronization priority of a terminal device that uses a terminal device as an initial clock synchronization reference source.

6. The method according to claim 5, wherein the at least one piece of clock synchronization information further comprises fourth clock synchronization information, and the fourth clock synchronization information is from a third terminal device;
the clock synchronization priority of the second terminal device is higher than a clock synchronization priority of the third terminal device; and
the first clock synchronization information indicates that the type of the initial clock synchronization reference source of the second terminal device is a terminal device, and indicates that the initial clock synchronization reference source of the second terminal device completes time-frequency synchronization with the access network device, and the fourth clock synchronization information indicates that a type of an initial clock synchronization reference source of the third terminal device is a terminal device, and indicates that the initial clock synchronization reference source of the third terminal device does not complete time-frequency synchronization with the access network device.

7. The method according to claim 5, wherein the at least one piece of clock synchronization information further comprises fourth clock synchronization information, and the fourth clock synchronization information is from a third terminal device;
the clock synchronization priority of the second terminal device is higher than a clock synchronization priority of the third terminal device; and
the first clock synchronization information indicates that a hop count between the second terminal device and the initial clock synchronization reference source of the second terminal device is a first quantity, the fourth clock synchronization information indicates that a hop count between the third terminal device and an initial clock synchronization reference source of the third terminal device is a second quantity, the first quantity is less than the second quantity, and the type that is of the initial clock synchronization reference source of the second terminal device and that is indicated by the first clock synchronization information is the same as a type that is of the initial clock synchronization reference source of the third terminal device and that is indicated by the fourth clock synchronization information.

8. The method according to any one of claims 1 to 7, wherein
selecting the clock synchronization reference source based on the at least one piece of clock synchronization information comprises: selecting the second terminal device as the clock synchronization reference source based on the at least one piece of clock synchronization information; and
the method further comprises:
determining a propagation delay and/or round trip time RTT with the second terminal device;
and
performing clock synchronization with the second terminal device based on the propagation delay and/or the RTT and the first clock synchronization information.

9. The method according to claim 8, wherein the first clock synchronization information is multicast information or broadcast information, the first clock synchronization information further comprises a first unicast identifier of the second terminal device, and the first unicast identifier is for unicast communication between the second terminal device and the first terminal device.

10. The method according to claim 9, wherein the method further comprises:
configuring a reference signal with the second terminal device based on the first unicast identifier, and/or configuring reporting of a measurement result with the second terminal device based on the first unicast identifier, wherein the measurement result is for determining the propagation delay and/or the RTT between the first terminal device and the second terminal device.

11. The method according to any one of claims 1 to 10, wherein the method further comprises:
receiving fifth clock synchronization information from a second device, wherein the second device is an access network device, a satellite device, or another terminal device; and
if a clock synchronization priority of the second device is higher than a clock synchronization priority of the first device, selecting the second device as a clock synchronization reference source, wherein the first device is the clock synchronization reference source that has been selected.

12. The method according to any one of claims 1 to 11, wherein the at least one piece of clock synchronization information further comprises the second clock synchronization information from the first access network device, and the second clock synchronization information comprises information about a second moment; and
the second moment is a moment of a boundary of a first system frame, and the second clock synchronization information further comprises a frame number of the first system frame; or
the second moment is a moment of a boundary of a first system information-window, and the first system information-window is for determining transmission time of first system information.

13. The method according to any one of claims 1 to 12, wherein the at least one piece of clock synchronization information further comprises the third clock synchronization information from the first satellite device.

14. A clock synchronization method, applied to a first terminal device or a chip of the first terminal device, wherein the method further comprises:
sending sixth clock synchronization information, wherein the sixth clock synchronization information is used by another terminal device to perform clock synchronization, and the sixth clock synchronization information comprises:
information about a third moment and information about a second time unit, wherein the third moment is a moment of a boundary of the second time unit.

15. The method according to claim 14, wherein the sixth clock synchronization information further comprises one or more of the following:
type information of an initial clock synchronization reference source of the first terminal device;
hop count information between the first terminal device and an initial clock synchronization reference source of the first terminal device; or
information about whether an initial clock synchronization reference source of the first terminal device completes time-frequency synchronization with an access network device, wherein
a type of the initial clock synchronization reference source comprises access network device, satellite device, or terminal device.

16. The method according to claim 15, wherein
before the sixth clock synchronization information is sent, first clock synchronization information is received from a second terminal device through a sidelink, and the first terminal device selects the second terminal device as a clock synchronization reference source, wherein
the first clock synchronization information comprises type information of an initial clock synchronization reference source of the second terminal device, and the type that is of the initial clock synchronization reference source and that is indicated by the type information of the initial clock synchronization reference source comprised in the sixth clock synchronization information is the same as a type that is of the initial clock synchronization reference source and that is indicated by the type information of the initial clock synchronization reference source comprised in the first clock synchronization information; and/or
the first clock synchronization information comprises hop count information between the second terminal device and an initial clock synchronization reference source of the second terminal device, and a hop count indicated by the hop count information comprised in the sixth clock synchronization information is a hop count indicated by the first clock synchronization information plus 1.

17. The method according to claim 15, wherein the method further comprises:
selecting a local clock of the first terminal device as a clock synchronization reference source, wherein the type that is of the initial clock synchronization reference source of the first terminal device and that is indicated by the sixth clock synchronization information is a terminal device, and/or a hop count indicated by the hop count information comprised in the sixth clock synchronization information is 0.

18. The method according to claim 15, wherein the method further comprises:
selecting a first access network device as a clock synchronization reference source, wherein a type that is of the initial clock synchronization reference source and that is indicated by the type information of the initial clock synchronization reference source comprised in the sixth clock synchronization information is an access network device, and/or a hop count indicated by the hop count information comprised in the sixth clock synchronization information is 0 or 1.

19. The method according to claim 15, wherein the method further comprises:
selecting a first satellite device as a clock synchronization reference source, wherein a type that is of the initial clock synchronization reference source and that is indicated by the type information of the initial clock synchronization reference source comprised in the sixth clock synchronization information is a satellite device, and/or a hop count indicated by the hop count information comprised in the sixth clock synchronization information is 0 or 1.

20. The method according to any one of claims 14 to 19, wherein the sixth clock synchronization information further comprises at least one unicast identifier of the first terminal device, and any one of the at least one unicast identifier is for unicast communication between the first terminal device and another terminal device.

21. The method according to any one of claims 14 to 20, wherein sending the sixth clock synchronization information comprises:
sending the sixth clock synchronization information when a first condition is met, wherein the first condition comprises at least one of the following:
the first terminal device is authorized to send clock synchronization information;
the first terminal device receives target clock synchronization information from a first device, and determines that the first device is the clock synchronization reference source, wherein received power corresponding to the target clock synchronization information is less than or equal to a first threshold, and the first device is an access network device, a satellite device, or another terminal device;
the first terminal device receives target clock synchronization information from a first device, and determines that the first device is the clock synchronization reference source, wherein received power corresponding to the target clock synchronization information is greater than or equal to a second threshold, and the first device is an access network device, a satellite device, or another terminal device; or
the first terminal device does not select a device other than the first terminal device as the clock synchronization reference source.

22. A communication apparatus, wherein the communication apparatus comprises a processing unit and a transceiver unit, and the processing unit is coupled to the transceiver unit, to perform the method according to any one of claims 1 to 13, or perform the method according to any one of claims 14 to 21.

23. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 13, or to enable the communication apparatus to perform the method according to any one of claims 14 to 21.

24. A computer-readable storage medium, wherein the computer-readable storage medium is configured to store a computer program, and when the computer program is run on a computer, the computer is enabled to perform the method according to any one of claims 1 to 13, or the computer is enabled to perform the method according to any one of claims 14 to 21.

25. A computer program product, wherein the computer program product comprises a computer program, and when the computer program is run on a computer, the computer is enabled to perform the method according to any one of claims 1 to 13, or the computer is enabled to perform the method according to any one of claims 14 to 21.

26. A chip system, wherein the chip system comprises:
a processor and an interface, wherein the processor is configured to invoke instructions from the interface and run the instructions, and when the processor executes the instructions, the method according to any one of claims 1 to 13 is implemented, or the method according to any one of claims 14 to 21 is implemented.
